(19) Europäisches Patentamt
European Patent Office
Office européen des brevets

(11) **EP 4 334 619 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **22725827.4**

(22) Anmeldetag: **26.04.2022**

(51) Internationale Patentklassifikation (IPC):
*F16L 27/08* *(2006.01)*       *F16J 15/34* *(2006.01)*

(52) Gemeinsame Patentklassifikation (CPC):
**F16L 27/082; F16J 15/3448;** F16L 27/0828

(86) Internationale Anmeldenummer:
**PCT/EP2022/061115**

(87) Internationale Veröffentlichungsnummer:
**WO 2022/233649 (10.11.2022 Gazette 2022/45)**

(54) **MULTIMEDIENTAUGLICHE DREHDURCHFÜHRUNG**

MULTIMEDIA ROTARY UNION

JOINT TOURNANT POUR FLUIDES MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: 05.05.2021 DE 102021111688
05.05.2021 DE 102021111690
03.12.2021 DE 102021131994
03.12.2021 DE 102021131995

(43) Veröffentlichungstag der Anmeldung:
**13.03.2024 Patentblatt 2024/11**

(73) Patentinhaber: **Deublin GmbH**
**55129 Mainz (DE)**

(72) Erfinder:
• **GRIMM, Eberhard**
**65205 Wiesbaden (DE)**
• **SKIPAS, Marcel**
**65199 Wiesbaden (DE)**
• **BUDZUS, Christoph**
**65604 Elz (DE)**

(74) Vertreter: **Blumbach · Zinngrebe Patentanwälte PartG mbB**
**Alexandrastraße 5**
**65187 Wiesbaden (DE)**

(56) Entgegenhaltungen:
EP-B1- 2 497 978     DE-B3- 102008 036 051
US-A- 5 669 636

## Beschreibung

Gebiet der Erfindung

Die Erfindung betrifft eine multimedientaugliche Drehdurchführung zum Überführen von verschiedenen fluiden Medien mit unterschiedlichen Viskositäten von einem stationären Maschinenteil auf einen rotierenden Maschinenteil im Allgemeinen und eine multimedientaugliche Drehdurchführung, bei welcher verschiedene Medien, insbesondere mit stark unterschiedlichen Viskositäten, z.B. kompressible Medien einerseits und höherviskose inkompressible Medien andererseits, wahlweise in unterschiedliche Medieneinlasskanäle druckbeaufschlagt eingeleitet werden können im Speziellen.

Hintergrund der Erfindung

Drehdurchführungen werden typischerweise verwendet, um fluide Medien in ein rotierendes Maschinenteil, z.B. eine rotierende Spindel einer Werkzeugmaschine, einzuspeisen. Hierzu enthält die Drehdurchführung eine Dichtung zwischen stationären Bauteilen und rotierenden Bauteilen. Diese Dichtung kann als axiale Gleitringdichtung ausgebildet sein. Typischerweise gleiten bei einer axialen Gleitringdichtung zwei Gleitringe oder Gleitdichtringe aufeinander, wobei sich einer der Gleitringe relativ zu dem anderen koaxial zur Rotationsachse dreht und die Gleitringe mit ihren gegenüberliegenden aneinander angrenzenden ringförmigen Stirnflächen gegeneinander dichten, um den mit einem fluiden Medium druckbeaufschlagten Innenraum gegen den Atmosphärendruck im Außenbereich zu dichten. Die Art der mittels einer Drehdurchführung zu übertragenden fluiden Medien kann variieren und insbesondere kompressible Medien, wie Gase, z.B. Druckluft, und flüssige Medien, wie z.B. Kühlschmiermittel oder Kühlschmierstoff (KSS), und Öle, wie z.B. Schneidöl oder Hydrauliköl, umfassen. Kühlschmierstoff besteht zumeist im Wesentlichen aus einer Öl-Wasser-Emulsion und weist typischerweise eine Viskosität auf, die nicht sehr viel größer ist als die Viskosität von reinem Wasser, mithin eine relativ niedrige Viskosität. Hingegen weisen Schneidöl und Hydrauliköl eine erheblich höhere Viskosität auf, welche bis zu 60 mm$^2$/s (cSt) oder mehr betragen kann. Ein ebenfalls bekanntes Verfahren ist die sogenannte Mindermengen- bzw. Minimalmengenschmierung (MMS/MQS). Diese verwendet typischerweise ein Aerosol in Form eines Öl-GasGemisches, also im Wesentlichen auch ein kompressibles Medium.

Es existiert eine Vielzahl von Drehdurchführungen, welche zumeist mehr oder weniger für einen oder einige wenige bestimmte der vorgenannten fluiden Medien und/oder für bestimmte Bereiche von zulässigen Betriebsparametern optimiert sind. Es sind zwar auch Drehdurchführungen bekannt, welche mit verschiedenen fluiden Medien mit unterschiedlichen Eigenschaften bzw. Viskositäten betrieben werden können, allerdings hat sich gezeigt, dass diese mitunter nicht in erwünschtem Maße universell bzw. zuverlässig sind. Z.B. können diese unter bestimmten Bedingungen und/oder bei manchen Medien unter Umständen z.B. bei hohen Drehzahlen überhitzen, was bis zur Zerstörung der Drehdurchführung führen kann. Unter anderem hat sich gezeigt, dass manche vermeintlich universelle Drehdurchführungen z.B. im Trockenlauf oder mit Druckluft bei hohen Drehzahlen erhebliche Probleme in Bezug auf die Standfestigkeit haben können. Als Trockenlauf wird typischerweise der rotierende Betrieb einer Drehdurchführung ohne Druckbeaufschlagung mit einem Medium bezeichnet.

Ferner können herkömmliche Drehdurchführungen teilweise eine relativ hohe Leckagerate im Druckluftbetrieb, z.B. von bis zu 100 Normlitern pro Minute oder mehr aufweisen, was ebenfalls unerwünscht sein kann.

Darüber hinaus ist bei manchen bekannten konventionellen Drehdurchführungen das Ansprechverhalten bei Druck- und/oder Medienwechsel bzw. beim Öffnen und Schließen der Gleitringdichtung weiter verbesserungsfähig.

Weiter nachteilig bei manchen Drehdurchführungen kann ein hoher Installationsaufwand für den Anwender sein, insbesondere, wenn die Drehdurchführung alternativ mit unterschiedlichen Medien druckbeaufschlagt werden soll. Teilweise ist hierfür eine komplexe externe Fluid-Verschaltung von Seiten des Anwenders erforderlich.

Ferner kann bei solchen Fluid-Verschaltungen in manchen Bereichen der Drehdurchführung ein Restdruck verbleiben, welcher ggf. nicht vollständig abgebaut wird und zu unerwünschten Betriebsbedingungen, z.B. im Trockenlauf, bis hin zur Reibung der Gleitringe führen kann.

Ein weiterer Nachteil mancher Drehdurchführungen ist, dass sich das Aerosol einer Mindermengenoder Minimalmengenschmierung an manchen Stellen der Drehdurchführung in unerwünschter Weise entmischen kann. Ferner lässt sich das Aerosol einer Mindermengen- bzw. Minimalmengenschmierung ggf. nicht ausreichend evakuieren oder entleeren, und es können sich im Laufe der Zeit entmischte flüssige Anteile des Aerosols in der Drehdurchführung ansammeln.

Manche Drehdurchführungen setzen öffnende oder schließende Federelemente für die Gleitringdichtung ein, um den Anpressdruck der Gleitringe gegeneinander zu beeinflussen. Auch dies kann sich unter bestimmten Betriebsbedingungen als nachteilig erweisen. Z.B. sind Federkräfte im Wesentlichen konstant und korrelieren nicht mit dem Mediumsdruck. Außerdem sind Federelemente zusätzliche, Kosten erzeugende und fehlerträchtige Bauteile.

In den Patenten EP 1 744 502 B1 und EP 2 497 978 B1 der Deublin Company ist eine Technologie beschrieben, bei welcher das Belastungsverhältnis der Gleitringdichtung in einem speziell vorgewählten Intervall liegt, und in einem weiten Druck- und Drehzahlbereich einen geeigneten Anpressdruck zwischen den beiden Gleitringen gewährleistet. Die Technologie von Deublin ist in der Fachwelt auch unter der Bezeichnung AutoSense® bekannt.

Aus der DE 10 2008 036 051 B3 ist eine Drehdurchführung bekannt, bei welcher die Dichtungsbuchse neben der Durchgangsbohrung mindestens einen zusätzlichen Kanal enthält, der für die Bildung eines Luftpolsters zwischen den Dichtflächen an der Dichtfläche der Dichtungsbuchse mündet, um auch ohne Steuerung des Anpressdruckes einen zu starken Verschleiß an der Dichtfläche zu verhindern.

Aus dem US Patent 5,669,636 ist eine schwimmende Dichtungsanordnung für eine Kühlmitteldurchführung bekannt, welche eine erste und zweite Dichtungsanordnung enthält, bei welchen jeweils O-Ringdichtungen in einer Ringnut in einem Träger angeordnet sind, wobei die O-Ringdichtungen kleiner sind als die Ringnuten, um den O-Ringdichtungen eine Bewegung innerhalb der Ringnuten zu ermöglichen, wenn sich der Träger axial vorwärts oder rückwärts bewegt.

Insgesamt sind viele der am Markt verfügbaren konventionellen Drehdurchführungen im Hinblick auf die Gesamtheit der teilweise widerstreitenden Anforderungen an Drehdurchführungen, wie z.B. Einsatzbereich der Betriebsparameter, Vielfältigkeit im Hinblick auf die verwendbaren fluiden Medien, Standfestigkeit, Einfachheit für den Verwender, Universalität, etc. in unterschiedlicher Weise mehr oder weniger beschränkt. Mit anderen Worten mögen bekannte konventionelle Drehdurchführungen zwar für bestimmte Anwendungsgebiete gut geeignet sein, können aber dennoch in unterschiedlichen Richtungen, insbesondere hinsichtlich ihrer Universalität, Standfestigkeit und Anwenderfreundlichkeit weiter verbessert werden.

Allgemeine Beschreibung der Erfindung

Die Erfindung hat sich die Aufgabe gestellt, eine multimedientaugliche Drehdurchführung bereit zu stellen, welche für verschiedene Medien, insbesondere kompressible Medien einerseits und verschiedene inkompressible Medien mit unterschiedlichen Viskositäten, bis hin zu höheren Viskositäten anderseits geeignet ist.

Ein weiterer Aspekt der Aufgabe ist es, eine multimedientaugliche Drehdurchführung bereit zu stellen, welche eine geringe Leckagerate im Betrieb mit unterschiedlichen Medien, Viskositäten, Drücken aufweist und auch bei hohen Drehzahlen langlebig und verschleißarm arbeitet.

Ein weiterer Aspekt der Aufgabe ist es, eine multimedientaugliche Drehdurchführung bereit zu stellen, welche sowohl mit i) Schneid- oder Hydrauliköl, ii) mit Kühlschmiermittel bzw. Kühlschmierstoff, iii) mit Druckluft, iv) mit aerosolen Medien für Mindermengen- oder Minimalmengenschmierung als auch v) medienlos und drucklos im Trockenlauf unter hohen Drehzahlen langlebig und verschleißarm arbeitet.

Ein weiterer Aspekt der Aufgabe ist es, eine multimedientaugliche Drehdurchführung bereit zu stellen, welche große Universalität ("one-for-all") und Einfachheit in der Benutzung für den Verwender bietet.

Ein weiterer Aspekt der Aufgabe ist es, eine Drehdurchführung bereit zu stellen, welche die vorstehend beschriebenen Nachteile nicht oder nur in geringerem Maße aufweist.

Die Aufgabe der Erfindung wird durch den Gegenstand der unabhängigen Ansprüche gelöst. Vorteilhafte Weiterbildungen der Erfindung sind in den Unteransprüchen definiert.

Gemäß einem Aspekt der Erfindung wird eine multimedientaugliche Drehdurchführung zum Überführen von verschiedenen fluiden Medien, einschließlich sowohl kompressible als auch inkompressible Medien und Medien mit unterschiedlichen Viskositäten in derselben Drehdurchführung von einem stationären Maschinenteil auf einen rotierenden Maschinenteil bereitgestellt. Die Drehdurchführung umfasst einen stationären Gehäuseteil zum Einbau in den stationären Maschenteil und einen Rotor zum Verbinden mit dem rotierenden Maschinenteil. Der stationäre Gehäuseteil weist einen Arbeitsraum oder axialen bzw. zentralen inneren Fluidkanal und der Rotor, z.B. in Form einer Hohlwelle, einen ebenfalls insbesondere axialen oder zentralen Fluidkanal auf, wobei die Fluidkanäle auch während der Rotation miteinander in Fluidverbindung stehen, um die kontinuierliche Fluidverbindung zwischen dem stationären Gehäuseteil und dem Rotor herzustellen. Der stationäre Gehäuseteil kann einteilig oder mehrteilig ausgebildet sein.

Die Drehdurchführung umfasst ferner eine axiale Gleitringdichtung zwischen dem stationären Gehäuseteil und dem Rotor, welche die Fluidverbindung zwischen dem Rotor und dem stationären Gehäuseteil während der Rotation abdichtet. Die Gleitringdichtung umfasst hierzu einen mit dem Rotor rotierenden Gleitring oder Gleitdichtring, den sogenannten Rotorgleitring und einen nicht rotierenden Gleitring oder Gleitdichtring, den sogenannten Statorgleitring. Damit die Gleitringdichtung im drucklosen Trockenlauf oder im Druckluftbetrieb kontrolliert öffnen kann, ist zumindest einer der beiden Gleitringe geringfügig axial beweglich aufgehängt. Dazu ist dieser Gleitring an einem axial beweglich gelagerten Gleitringträger befestigt, und die Gleitringdichtung kann durch axiale Bewegung des Gleitringträgers mit dem daran befestigten Gleitring öffnen und schließen. Aus konstruktiver Sicht ist es zumeist einfacher, den Statorgleitring axial beweglich aufzuhängen. In diesem Fall bildet der axial bewegliche Gleitringträger mit dem daran befestigten Statorgleitring eine axial bewegliche Statorgleitringanordnung. Die Statorgleitringanordnung ist mittels des Gleitringträgers axial verschieblich und vorzugsweise mit etwas Winkelspiel in dem inneren Fluidkanal des stationären Gehäuseteils gelagert, um eine präzise Dichtung zwischen den aneinandergrenzenden Dichtflächen der beiden Gleitringe zu gewährleisten. Ein derart axial verschieblicher und ggf. geringfügig kippbarer Statorgleitring wird in der Fachwelt auch als schwebender (Stator-)Gleitring bezeichnet.

Mit anderen Worten umfasst im Fall eines schwebenden Statorgleitrings die Gleitringdichtung eine in dem stationären Gehäuseteil axial bewegliche, aber nicht rotierende, Gleitringanordnung mit dem Statorgleitring sowie einen mit dem Rotor rotierenden komplementären Rotorgleitring. Der Rotorgleitring kann z.B. an der dem stationären Gehäuseteil zugewandten Stirnseite des Rotors befestigt, z.B. verpresst und/oder verklebt oder anderweitig befestigt sein.

Es soll jedoch nicht ausgeschlossen sein, die Anordnung aus schwebendem Gleitring und dem dazu komplementären Gleitring umzukehren, also den Rotorgleitring axial beweglich aufzuhängen, um den Rotorgleitring als schwebenden Gleitring auszubilden. Die Gleitringdichtung kann in beiden Fällen mit AutoSense® und Pop-Off®-Funktionalität ausgebildet sein.

Das rückwärtige, von der Gleitringdichtung entfernte Ende des Gleitringträgers mündet vorzugsweise in den Arbeitsraum bzw. inneren Fluidkanal, welcher insbesondere koaxial mit dem Rotor, der Gleitringdichtung und/oder dem Gleitringträger verläuft. Der Arbeitsraum, der hohle Gleitringträger und der Rotorfluidkanal bilden gemeinsam einen insbesondere geradlinigen zentralen Gesamtfluidkanal der Drehdurchführung, der sich axial durch den stationären Gehäuseteil und den Rotor erstreckt. Der Gesamtfluidkanal wird also von einem stationären Kanalabschnitt und einem dazu koaxialen rotierenden Kanalabschnitt gebildet, welche mittels der axialen Gleitringdichtung gegeneinander gedichtet sind. Die Drehdurchführung weist vorzugsweise nur einen einzigen zentralen Gesamtfluidkanal auf, in welchen die Medieneinlasskanäle münden. Ferner vorzugsweise weist die Drehdurchführung nur eine einzige axiale Gleitringdichtung in dem zentralen Gesamtfluidkanal auf.

Der stationäre Gehäuseteil weist zumindest einen ersten und zweiten Medieneinlasskanal mit einem erstem bzw. zweitem Anschlussport, z.B. für einen Rohr- oder Schlauchanschluss, zum Einleiten von fluiden Medien in den stationären Gehäuseteil auf, wobei der erste und der zweite Medieneinlasskanal in den inneren Fluidkanal des Stators münden. Mittels der zwei getrennten Medieneinlasskanäle können, alternativ entweder in den einen oder in den anderen Medieneinlasskanal, wechselweise nacheinander unter Druckbeaufschlagung unterschiedliche fluide Medien in die Drehdurchführung eingeleitet werden.

Die Gleitringdichtung weist nun bei Druckbeaufschlagung des ersten Medieneinlasskanals mit Medium ein erstes Belastungsverhältnis und bei Druckbeaufschlagung des zweiten Medieneinlasskanals mit Medium ein, von dem ersten Belastungsverhältnis verschiedenes, zweites Belastungsverhältnis auf. Unterschiedlichen Medieneinlasskanälen sind demnach unterschiedliche Belastungsverhältnisse zugeordnet. Insbesondere ist das zweite Belastungsverhältnis größer als das erste Belastungsverhältnis.

Die Drehdurchführung kann in vorteilhafter Weise mit sehr unterschiedlichen Medien betrieben werden, insbesondere kompressible Medien (Gase, Druckluft, Aerosole, Mindermengen- oder Minimalmengenschmierung (MMS/MQS)) einerseits und inkompressible Medien andererseits (Flüssigkeiten, wie z.B. Kühlschmiermittel bzw. Kühlschmierstoff (KSS), Schneidöl und/oder Hydrauliköl). Daher kann die Drehdurchführung als multimedientauglich bezeichnet werden. Besonders vorteilhaft ist, dass die Drehdurchführung neben niederviskosen flüssigen Medien, wie KSS, auch mit höherviskosen Medien wie Schneidöl oder Hydrauliköl zuverlässig arbeitet. Darüber hinaus hat die vorliegende Drehdurchführung auch hervorragende Trockenlaufeigenschaften, also Betrieb ohne druckbeaufschlagtes Medium, und das mit geringem Verschleiß und hoher Standfestigkeit. Ferner kann die Leckagerate im Druckluftbetrieb in akzeptabel geringem Maß gehalten werden. Daher kann die vorliegende Drehdurchführung sogar als allmedientauglich bezeichnet werden.

Insbesondere dichtet die axiale Gleitringdichtung unter Druckbeaufschlagung mit einem flüssigen Medium im Wesentlichen leckagefrei und im Druckluftbetrieb öffnet die Gleitringdichtung kontrolliert, d.h. durch das Öffnen entsteht ein kontrollierter Luftspalt zwischen dem Statorgleitring und dem Rotorgleitring, so dass sich im Druckluftbetrieb eine kontrollierte Luftleckage bzw. ein Luftpolster zwischen den Gleitringen einstellen kann. Mittels des jeweils wirksamen Belastungsverhältnisses, d.h. der unterschiedlichen Belastungsverhältnisse an den verschiedenen Medieneinlasskanälen können eine relativ geringe vordefinierte Gasleckage bei Druckbeaufschlagung mit einem gasförmigen Medium an dem ersten Medieneinlasskanal einerseits und im Wesentlichen Leckagefreiheit bei Druckbeaufschlagung mit flüssigem Medium an dem zweiten Medieneinlasskanal andererseits jeweils unabhängig voneinander eingestellt bzw. optimiert werden.

Die Drehdurchführung kann mit Medien, die eine niedrige Viskosität aufweisen bzw. mit kompressiblen Medien über den ersten Medieneinlasskanal mit dem ersten niedrigeren Belastungsverhältnis und alternativ mit Medien, die eine höhere Viskosität aufweisen über den zweiten Medieneinlasskanal mit dem zweiten höheren Belastungsverhältnis betrieben werden, und dabei mit allen Medien eine zufriedenstellende Dichtwirkung als auch einen geringen Verschleiß aufweisen. Mit anderen Worten weist die Gleitringdichtung bei Druckbeaufschlagung des ersten Medieneinlasskanals oder im drucklosen Zustand das erste, insbesondere niedrigere Belastungsverhältnis auf und schaltet bei Druckbeaufschlagung mit insbesondere flüssigem Medium des zweiten Medieneinlasskanals auf das zweite, insbesondere höhere Belastungsverhältnis um.

Die Umschaltung zwischen den verschiedenen Belastungsverhältnissen erfolgt automatisch hydrau-

Die multimedientaugliche Drehdurchführung kann über den ersten Medieneinlasskanal z.B. mit einem kompressiblen Medium, z.B. einem gasförmigen Medium, z.B. Druckluft und alternativ über den zweiten Medieneinlasskanal z.B. mit einem höherviskosen flüssigen Medium, z.B. Schneidöl, z.B. mit einer Viskosität im Bereich von 6 mm$^2$/s bis 18 mm$^2$/s oder z.B. mit einem Hydrauliköl, z.B. mit einer Viskosität im Bereich von 32 mm$^2$/s bis 46 mm$^2$/s (40°C), ggf. sogar bis zu 60 mm$^2$/s (40°C) oder mehr, jeweils unter hohen Drehzahlen, z.B. 24.000 min$^{-1}$ betrieben werden, ohne dass die Gleitringe übermäßig erhitzen und mit akzeptabel geringer Leckagerate bzw. im Wesentlichen leckagefrei. Der erste Medieneinlasskanal kann aber ggf. auch mit einem niedrigviskosen flüssigen Medium, z.B. Kühlschmiermittel bzw. Kühlschmierstoff (KSS), z.B. mit einer Viskosität im Bereich von 1 mm$^2$/s bis 3 mm$^2$/s betrieben werden. Vorzugsweise werden die beiden unterschiedlichen Belastungsverhältnisse also derart gewählt bzw. sind mittels der Durchmesserverhältnisse derart eingestellt, dass das erste Belastungsverhältnis für kompressible Medien und/oder flüssige Medien mit geringer Viskosität und das zweite Belastungsverhältnis für flüssige Medien mit höherer Viskosität geeignet ist.

Die Drehdurchführung weist demnach insbesondere eine hydraulisch oder pneumatisch gesteuerte Belastungsverhältnis-Umschalteinrichtung auf, mittels welcher die Gleitringdichtung bzw. genauer die axial bewegliche (Stator-)Gleitringanordnung hydraulisch oder pneumatisch zwischen dem ersten und zweiten Belastungsverhältnis umschaltbar ist. Das Umschalten von dem ersten auf das zweite Belastungsverhältnis bzw. umgekehrt, erfolgt vorzugsweise durch Druckbeaufschlagung bzw. Drucklosstellung des zweiten Medieneinlasskanals. Mit anderen Worten liegt das niedrigere erste Belastungsverhältnis vor, wenn kein Mediendruck anliegt oder wenn der erste Medieneinlasskanal druckbeaufschlagt wird, vorzugsweise mit einem Medium geringerer Viskosität, und die Drehdurchführung schaltet um auf das höhere zweite Belastungsverhältnis, wenn der zweite Medieneinlasskanal druckbeaufschlagt wird, vorzugsweise mit einem flüssigen Medium höherer Viskosität.

Vorzugsweise wird die axiale Dichtkraft im Wesentlichen durch den Mediumsdruck (hydraulisch/pneumatisch) bewirkt. Solche Gleitringdichtungen werden auch als balancierte Gleitringdichtung bezeichnet. Mit anderen Worten ist die Gleitringdichtung eine balancierte Gleitringdichtung, bei welcher die Belastungsverhältnisse derart gewählt sind, dass die Gleitringdichtung ausschließlich hydraulisch bzw. pneumatisch ausbalanciert ist. Bei diesen Gleitringdichtungen wird die axiale Dichtkraft also im Wesentlichen durch das geometrische Belastungsverhältnis eingestellt. Entsprechende Drehdurchführungen mit einem Belastungsverhältnis in einem bestimmten Bereich werden von der Anmelderin auch mit der Bezeichnung Autosense® versehen. Eine solche Gleitringdichtung kann insbesondere ohne öffnende und/oder ohne schließende Feder arbeiten, wobei aber gewisse Federelemente, die zusätzliche ggf. geringfügige Öffnungs- oder Schließkräfte erzeugen, nicht grundsätzlich ausgeschlossen sein sollen.

In vorteilhafter Weise kann somit eine universelle multimedientaugliche Drehdurchführung geschaffen werden, die bei Druckbeaufschlagung mit sehr unterschiedlichen Medien, z.B. kompressiblen Medien einerseits, z.B. Druckluft, und hochviskosen flüssigen Medien, z.B. Schneidöl oder Hydrauliköl, andererseits, geeignet ist und zwar mit hoher Standfestigkeit bei hohen Drehzahlen und geringer Leckagerate bei allen der eingesetzten Medien, insbesondere bei flüssigen Medien im Wesentlichen leckagefrei.

Gemäß einer Ausführungsform erfolgt also die Umschaltung zwischen dem ersten und zweiten Belastungsverhältnis hydraulisch an dem zweiten Medieneinlasskanal, derart dass die Gleitringdichtung bei Drucklosigkeit an dem zweiten Medieneinlasskanal das erste Belastungsverhältnis aufweist und bei Druckbeaufschlagung des zweiten Medieneinlasskanals insbesondere mit einem flüssigen Medium das zweite Belastungsverhältnis aufweist, wobei die Gleitringdichtung insbesondere auch bei Drucklosigkeit an dem zweiten Medieneinlasskanal und druckbeaufschlagter Einleitung eines fluiden Mediums in den ersten Medieneinlasskanal das erste Belastungsverhältnis aufweist.

Vorzugsweise ist der Gleitringträger in Form eines Hohlkolbens ausgebildet. Der sogenannte schwebende Gleitring des Stators ist vorzugsweise an der rotorseitigen Stirnseite des axial beweglich in dem stationären Gehäuseteil gelagerten Hohlkolbens befestigt, um je nach Medium mit variablem Anpressdruck bzw. variablem Spaltmaß gegen den rotierenden Rotorgleitring gleitend zu dichten. Die Umschaltung von dem ersten auf das zweite Belastungsverhältnis erfolgt hydraulisch durch Druckbeaufschlagung auf den Außendurchmesser des Hohlkolbens mit dem über den zweiten Medieneinlasskanal eingeleiteten Medium. Hierzu weist der Hohlkolben insbesondere einen kleineren ersten und einen größeren zweiten Außendurchmesser oder Wirkdurchmesser auf, welche zu den unterschiedlichen Belastungsverhältnissen korrespondieren. Der Gleitringträger ist also, z.B. als Stufenkolben, mit mindestens zwei unterschiedlichen Wirkdurchmessern ausgebildet, wobei auch ein kontinuierlicher Übergang zwischen den beiden Wirkdurchmessern möglich ist. Für einen schwebenden Rotorgleitring gilt dies entsprechend.

Vorzugsweise umfasst der stationäre Gehäuseteil einen internen Steuerkanal, welcher von dem zweiten Medieneinlasskanal abzweigt und zu dem Hohlkolben führt, um dessen Außendurchmesser mit Mediumsdruck zu beaufschlagen, um das Belastungsverhältnis zu verändern bzw. von dem ersten auf das zweite Belastungsverhältnis umzuschalten.

Gemäß einer Ausführungsform sind der erste und zweite Medieneinlasskanal durch ein, insbesondere in dem stationären Gehäuseteil integriertes Ventil getrennt. Insbesondere weist der zweite Medieneinlasskanal ein integriertes Rückschlagventil auf und der Steuerkanal zweigt vor dem Rückschlagventil von dem zweiten Medieneinlasskanal ab und führt an den Außendurchmesser des Hohlkolbens. Dadurch kann vermieden werden, dass ein Restdruck in dem Steuerkanal verbleibt, nachdem das Medium abgeschaltet wird, z.B. indem ein vorgeschaltetes maschinenseitiges Ventil in Nullstellung geht und den Medientank entlüftet.

Vorzugsweise weist zumindest ein anderer Medieneinlasskanal, insbesondere der erste Medieneinlasskanal keinen Steuerkanal auf, der an den zweiten Außendurchmesser des Hohlkolbens führt, so dass sich bei Druckbeaufschlagung des zweiten Medieneinlasskanals und des Steuerkanals ein anderes, insbesondere größeres Belastungsverhältnis einstellt, als bei Druckbeaufschlagung eines Medieneinlasskanals, insbesondere des ersten Medieneinlasskanals, ohne solchen Steuerkanal.

Der Hohlkolben der axial beweglichen Statorgleitringanordnung wird also vorzugsweise über den internen Steuerkanal, welcher von dem zweiten Medieneinlasskanal in dem stationären Gehäuseteil abzweigt und an den, insbesondere größeren zweiten Wirkdurchmesser des Hohlkolbens führt, um den zweiten Wirkdurchmesser des Hohlkolbens mittels eines flüssigen Mediums, das in den zweiten Medieneinlasskanal druckbeaufschlagt eingeleitet wird, mit (demselben) hydraulischem Druck zu beaufschlagen, um die Umschaltung von dem ersten auf das zweite Belastungsverhältnis zu bewirken.

Demnach weist der Hohlkolben vorzugsweise einen ersten axialen Bereich mit einem ersten Wirkdurchmesser oder Außendurchmesser und einen zweiten axialen Bereich mit einem zweiten Wirkdurchmesser oder Außendurchmesser auf, z.B. in Form eines Stufenkolbens, wobei der erste Wirkdurchmesser zu dem ersten Belastungsverhältnis korrespondiert und der zweite Wirkdurchmesser zu dem zweiten Belastungsverhältnis, welches sich von dem ersten Belastungsverhältnis unterscheidet, und der Steuerkanal führt zu dem zweiten axialen Bereich, und das zweite Belastungsverhältnis wird dadurch bewirkt, dass der zweite Wirkdurchmesser des Hohlkolbens über den Steuerkanal mit dem, insbesondere flüssigen, Medium druckbeaufschlagt wird.

Gemäß weiteren Ausführungsformen kann der stationäre Gehäuseteil einen oder mehrere weitere Medieneinlasskanäle z.B. einen dritten Medieneinlasskanal zum Einleiten von fluiden Medien umfassen. Auch der dritte Medieneinlasskanal mündet in den inneren Fluidkanal, so dass fluide Medien mit unterschiedlicher Viskosität unter Druckbeaufschlagung alternativ entweder über den ersten, den zweiten oder den dritten Medieneinlasskanal in die Drehdurchführung eingeleitet werden können, wobei die Medien je nach Medieneinlasskanal kompressibel oder inkompressibel sein können. Vorzugsweise verläuft zumindest einer der Medieneinlasskanäle, insbesondere der dritte Medieneinlasskanal axial und mündet axial in den inneren Fluidkanal. Das ist vorteilhaft für Mindermengenschmierung bzw. Minimalmengenschmierung. Diese liegt insbesondere in Form eines Aerosols vor und durch eine möglichst geradlinige Kanalführung kann in vorteilhafter Weise eine unerwünschte Entmischung vermieden werden. Es ist ersichtlich, dass auch schon bei zwei Medieneinlasskanälen einer der beiden axial verlaufen kann, insbesondere der erste Medieneinlasskanal, der das geringere Belastungsverhältnis aufweist.

Vorzugsweise münden der erste, zweite und/oder dritte Medieneinlasskanal rückwärtig des Gleitringträgers in den Arbeitsraum.

Vorzugsweise wird auch bei Druckbeaufschlagung des dritten Medieneinlasskanals mit Medium, insbesondere mit einem Aerosol einer Mindermengen- oder Minimalmengenschmierung der Steuerkanal nicht druckbeaufschlagt, so dass bei Druckbeaufschlagung des dritten Medieneinlasskanals das, insbesondere geringere, erste Belastungsverhältnis vorliegt.

Demnach können eines, mehrere oder alle der folgenden Merkmale erfüllt sein:

zumindest einer der Medieneinlasskanäle verläuft radial und mündet radial in den axialen inneren Fluidkanal, z.B. der erste oder zweite Medieneinlasskanal,

zumindest zwei der Medieneinlasskanäle verlaufen radial und münden radial in den axialen inneren Fluidkanal, z.B. der erste und zweite Medieneinlasskanal,

einer der Medieneinlasskanäle verläuft axial und mündet axial in den axialen inneren Fluidkanal, z.B. der erste oder dritte Medieneinlasskanal.

Ferner können eines, mehrere oder alle der folgenden Merkmale erfüllt sein:

zumindest einer der Medieneinlasskanäle weist ein integriertes Rückschlagventil auf, z.B. der erste oder zweite Medieneinlasskanal,

zumindest einer der radialen Medieneinlasskanäle weist ein integriertes Rückschlagventil auf, z.B. der erste oder zweite Medieneinlasskanal,

zumindest zwei der radialen Medieneinlasskanäle weisen jeweils ein integriertes Rückschlagventil auf, z.B. der erste und zweite Medieneinlasskanal,

der axiale Medieneinlasskanal, z.B. der erste oder dritte Medieneinlasskanal weist kein integriertes (Rückschlag-)Ventil auf. Ohne Rückschlagventil in dem axialen Medieneinlasskanal kann bei Mindermengen- bzw. Minimalmengenschmierung in vorteilhafter Weise eine unerwünschte Entmischung des Aerosols vermieden werden.

Ferner können zumindest eines, mehrere oder alle der folgenden Merkmale erfüllt sein:

zumindest einer der Medieneinlasskanäle, vorzugsweise der zweite Medieneinlasskanal ist hergerichtet, bei Druckbeaufschlagung mit höherviskosem Schneid- oder Hydrauliköl das, insbesondere größere, zweite Belastungsverhältnis der Gleitringdichtung zu bewirken, wobei das zweite Belastungsverhältnis für Schneid- oder Hydrauliköl geeignet ist, zumindest ein anderer der Medieneinlasskanäle ist hergerichtet, bei Druckbeaufschlagung das erste Belastungsverhältnis der Gleitringdichtung zu bewirken, wobei das, insbesondere geringere, erste Belastungsverhältnis für gasförmige Medien, z.B. Druckluft geeignet ist,
zumindest einer der Medieneinlasskanäle ist hergerichtet, bei Druckbeaufschlagung mit Kühlschmiermittel oder Kühlschmierstoff (KSS) das erste oder das zweite Belastungsverhältnis zu bewirken, wobei das erste bzw. zweite Belastungsverhältnis für Kühlschmiermittel oder Kühlschmierstoff (KSS) geeignet ist,
einer der Medieneinlasskanäle, vorzugsweise der axiale Medieneinlasskanal, ist hergerichtet, bei Druckbeaufschlagung mit einem Aerosol einer Mindermengen- oder Minimalmengenschmierung das erste Belastungsverhältnis der Gleitringdichtung zu bewirken, wobei das erste Belastungsverhältnis für das Aerosol einer Mindermengen- oder Minimalmengenschmierung geeignet ist.

Vorzugsweise weist das erste Belastungsverhältnis der Gleitringdichtung (drucklos oder bei Druckbeaufschlagung des ersten Medieneinlasskanals) einen Wert im Bereich von 0,45 bis 0,6, vorzugsweise im Bereich von 0,47 bis 0,57, vorzugsweise im Bereich von 0,49 bis 0,55, vorzugsweise einen Wert von 0,52 +/-0,02 auf.

Weiter vorzugsweise weist das zweite Belastungsverhältnis der Gleitringdichtung (bei Druckbeaufschlagung des zweiten Medieneinlasskanals) einen Wert größer als 0,6, vorzugsweise im Bereich von 0,62 bis 1, vorzugsweise im Bereich von 0,65 bis 0,7, vorzugsweise einen Wert von 0,66 +/-0,02 auf.

Vorzugsweise liegt bei Druckbeaufschlagung des ersten Medieneinlasskanals mit einem fluiden Medium, insbesondere mit einem gasförmigen Medium, z.B. Druckluft, das erste Belastungsverhältnis, bei Druckbeaufschlagung des zweiten Medieneinlasskanals mit einem flüssigen Medium, insbesondere mit Schneid- oder Hydrauliköl, das zweite Belastungsverhältnis, und/oder bei Druckbeaufschlagung des dritten axialen Medieneinlasskanals mit einem fluiden Medium, insbesondere mit einem Aerosol einer Mindermengen- oder Minimalmengenschmierung, das erste Belastungsverhältnis vor. Hiermit kann in vorteilhafter Weise eine besonders universelle Drehdurchführung geschaffen werden, welche für nahezu alle wichtigen unterschiedlichen Medien geeignet ist und für jedes der Medien ein langlebiger zuverlässiger Betrieb bei hohen Drehzahlen und geringer Leckagerate, bzw. bei flüssigen Medien im Wesentlichen leckagefrei, ermöglicht.

Vorzugsweise verläuft der zweite Medieneinlasskanal radial und mündet radial in den inneren Fluidkanal, und ein anderer der Medieneinlasskanäle, z.B. der erste oder dritte Medieneinlasskanal verläuft axial und mündet axial in den inneren Fluidkanal. Ferner sind vorzugsweise das Belastungsverhältnis bei Druckbeaufschlagung des radialen zweiten Medieneinlasskanals und das Belastungsverhältnis bei Druckbeaufschlagung des axialen Medieneinlasskanals unterschiedlich. Insbesondere ist das Belastungsverhältnis bei Druckbeaufschlagung des radialen zweiten Medieneinlasskanals größer als das Belastungsverhältnis bei Druckbeaufschlagung des axialen Medieneinlasskanals.

In vorteilhafter Weise können für die vorliegende Drehdurchführung Siliciumcarbid-Gleitringe für zumindest einen der Gleitringe, vorzugsweise für beide Gleitringe (SiC-SiC-Gleitringdichtung), verwendet werden, wobei diese bei weiten zulässigen Betriebsparametern, wie Drehzahl, Medien, Viskosität, Mediendruck, Temperatur, etc. mit hoher Standfestigkeit eingesetzt werden können.

Gemäß einer Ausführungsform führt der Steuerkanal an einen Außendurchmesser des Hohlkolbens und der Hohlkolben ist mittels einer Sekundärdichtung in dem stationären Gehäuseteil gedichtet. Vorzugsweise umfasst die Sekundärdichtung einen ersten und einen zweiten Sekundärdichtring, welche auf axial gegenüberliegenden Seiten des Steuerkanals angeordnet sind. Insbesondere ist der erste Sekundärdichtring als elastomerer Quadring und/oder der zweite Sekundärdichtring ist als Elastomerring mit einem U-förmigen Querschnitt, sogenannter U-Cup-Ring, ausgebildet. Insbesondere die Verwendung eines Quadrings auf der dem Rotor zugewandten Seite des Steuerkanals hat sich als vorteilhaft erwiesen, um z.B. bei Drucklosstellung zumindest unter Mitwirkung der durch Verformung des Quadrings erzeugten elastischen Rückstellkraft auf die axial beweglich gelagerte Gleitringanordnung die beiden Gleitringe voneinander zu trennen, um z.B. unerwünschte Reibung zwischen den Gleitringen beim drucklosen Trockenlauf zu vermeiden. Allerdings kann auch der elastomere U-Cup-Ring zur axialen Bewegung beitragen. Mit der genannten Sekundärdichtung können ferner in vorteilhafter Weise kurze Schaltzeiten erzielt werden.

Es wird darauf hingewiesen, dass diese Vorteile des Quadrings nicht auf die vorstehend beschriebene multimedientaugliche Drehdurchführung beschränkt sind, sondern der Quadring auch in vielen klassischen Drehdurchführungen, insbesondere mit nur einem Belastungsverhältnis und/oder mit nur einem Medieneinlasskanal eingesetzt werden kann.

Vorzugsweise wird der Quadring auf einem Außendurchmesser des axial beweglichen Gleitringträgers bzw. Hohlkolbens vorgespannt und/oder ist an seinem Außendurchmesser axial relativ zu dem stationären Gehäuseteil verschieblich. Dadurch kann sich der Quadring beim Öffnen und Schließen der axialen Gleitringdichtung relativ leicht gemeinsam mit der Statorgleitringanordnung in dem stationären Gehäuseteil axial bewegen und eine axiale Kraft auf die Statorgleitringanordnung ausüben. Dies kann hinsichtlich der auf den Quadring wirkenden hydraulischen Kräfte und der axialen Bewegung der Statorgleitringanordnung zwischen den verschiedenen Medienbeschaltungszuständen vorteilhaft sein.

Vorzugsweise ist der Quadring in einer umlaufenden Nut mit axialem Übermaß in dem stationären Gehäuseteil beherbergt. Dadurch hat der Quadring in der Nut ein axiales Spiel und kann sich axial in der Nut bewegen. Im druckbeaufschlagten Zustand wirkt der Mediumsdruck axial auf den Quadring in Richtung des Rotors. Dadurch wird der Quadring an die rotorseitige radiale Ringwandung der Nut gepresst, wenn der Quadring mit Mediumsdruck beaufschlagt wird, was zu einer Verformung des Quadrings führen kann. Bei Entlastung des Quadrings vom Mediumsdruck, z.B. bei Drucklosstellung bewegt sich die Statorgleitringanordnung vom Rotor weg, wobei sich die Dichtflächen der beiden Gleitringe voneinander lösen und ein Spalt zwischen den Dichtflächen entstehen kann. Der Quadring verliert nachfolgend vorzugsweise den Kontakt zu der rotorseitigen radialen Ringwandung. Dies kann vorteilhaft für die axiale Bewegung der Statorgleitringanordnung beim Beaufschlagen der Drehdurchführung mit Mediumsdruck bzw. Entlasten vom Mediumsdruck sein, und kann zu einem zuverlässigen und schnellen Schließen und Öffnen der axialen Gleitringdichtung, also Kontaktieren und Lösen der axialen Dichtflächen der beiden Gleitringe, beitragen.

Gegenstand der vorliegenden Erfindung ist ferner eine multimedientaugliche bzw. allmedientaugliche Drehdurchführung zum Überführen von verschiedenen fluiden Medien mit unterschiedlichen Viskositäten von einem stationären Maschinenteil auf einen rotierenden Maschinenteil, umfassend:

einen stationären Gehäuseteil zum Einbau in den stationären Maschenteil und mit einem Arbeitsraum oder inneren axialen bzw. zentralen Fluidkanal,
einen Rotor, in Form einer Hohlwelle, zum Verbinden mit dem rotierenden Maschinenteil und mit einem axialen bzw. zentralen Fluidkanal zur Herstellung einer Fluidverbindung mit dem Arbeitsraum bzw. inneren Fluidkanal des stationären Gehäuseteils,
eine axiale Gleitringdichtung zwischen dem stationären Gehäuseteil und dem Rotor zum Dichten der Fluidverbindung des stationären Gehäuseteils gegenüber dem rotierenden Rotor, wobei die Gleitringdichtung einen mit dem Rotor rotierenden Rotorgleitring an der dem stationären Gehäuseteil zugewandten Stirnseite und in dem stationären Gehäuseteil eine axial bewegliche, nicht-rotierende Statorgleitringanordnung mit einem (sogenannten schwebenden) Statorgleitring umfasst, oder umgekehrt, wobei der stationäre Gehäuseteil zumindest einen ersten und zweiten Medieneinlasskanal mit erstem und zweitem Anschlussport zum Einleiten von fluiden Medien in den stationären Gehäuseteil umfasst, wobei der erste und zweite Medieneinlasskanal in den inneren Fluidkanal münden und wobei über den ersten oder den zweiten Medieneinlasskanal wahlweise alternativ unterschiedliche fluide Medien mit unterschiedlicher Viskosität, insbesondere kompressible Medien in den einen Medieneinlasskanal und höherviskose inkompressible Medien, wie z.B. Schneidöl oder Hydrauliköl, in den anderen Medieneinlasskanal, unter Druckbeaufschlagung in die Drehdurchführung eingeleitet werden können, und wobei eine hydraulisch oder pneumatisch gesteuerte Belastungsverhältnis-Umschalteinrichtung umfasst ist, mittels welcher die axial bewegliche (Stator-)Gleitringanordnung mittels des jeweiligen Mediumsdrucks (hydraulisch oder pneumatisch) zwischen einem ersten und zweiten Belastungsverhältnis umgeschaltet wird.

Gemäß einem weiteren Aspekt der Erfindung wird eine Drehdurchführung zum Überführen von fluiden Medien von einem stationären Maschinenteil auf einen rotierenden Maschinenteil bereitgestellt, welche einen stationären Gehäuseteil zum Einbau in den stationären Maschenteil und einen Rotor zum Verbinden mit dem rotierenden Maschinenteil umfasst. Die Drehdurchführung weist ferner in dem stationären Gehäuseteil einen Arbeitsraum oder inneren axialen bzw. zentralen Fluidkanal und in dem Rotor einen axialen bzw. zentralen Fluidkanal zur Herstellung einer Fluidverbindung mit dem Arbeitsraum bzw. dem inneren Fluidkanal des stationären Gehäuseteils auf. Der Rotor ist insbesondere in Form einer Hohlwelle ausgebildet.

Die Drehdurchführung weist ferner eine axiale Gleitringdichtung zwischen dem stationären Gehäuseteil und dem Rotor zur Abdichtung der Fluidverbindung des stationären Gehäuseteil gegenüber dem rotierenden Rotor auf, wobei die Gleitringdichtung einen mit dem Rotor rotierenden Rotorgleitring an der dem stationären Gehäuseteil zugewandten Stirnseite des Rotors und einen Statorgleitring aufweist. Wie vorstehend bereits beschrieben, kann entweder der Statorgleitring oder der Rotorgleitring an einem axial beweglich gelagerten Gleitringträger befestigt sein und somit als axial beweglicher (schwebender) Gleitring ausgebildet sein.

Gemäß diesem Aspekt der Erfindung weist der stationäre Gehäuseteil zumindest einen Medieneinlasskanal mit einem Anschlussport zum Einleiten von fluiden, z.B. kompressiblen, inkompressiblen, insbesondere flüssigen, gasförmigen oder aerosolen Medien in den stationären Gehäuseteil auf, wobei der Medieneinlasskanal in den Arbeitsraum bzw. inneren Fluidkanal mündet.

Die Drehdurchführung umfasst ferner vorzugsweise ein elastisches Rückverformungselement, welches bei Druckbeaufschlagung mit flüssigem Medium von dem Mediumsdruck axial gegen eine sich transversal erstreckende Wandung des stationären Gehäuseteils gepresst und dabei elastisch verformt wird. Bei Druckentlastung bzw. Drucklosstellung rückverformt sich das elastische Rückverformungselement und drückt sich durch die elastische Rückverformung von der sich transversal erstreckenden Wandung wieder ab und zieht dabei die Gleitringanordnung vom Rotor weg, um die Gleitringdichtung zu öffnen. Die Wandung bildet demnach einen axialen Anschlag für das elastische Rückverformungselement. Das elastische Rückverformungselement besteht insbesondere aus elastomerem Material bzw. ist als Elastomerring ausgebildet. Der Elastomerring ist vorzugsweise als Rundschnurring mit einem angenähert rechteckigen bzw. quadratischen Querschnitt ausgebildet, vorzugsweise mit abgerundeten Ecken, wobei die abgerundeten Ecken Lippendichtungen bilden.

Vorzugsweise ist eine Sekundärdichtung umfasst, mittels welcher der Gleitringträger, z.B. in dem stationären Gehäuseteil, axial verschieblich gelagert und gedichtet ist. Gemäß diesem Aspekt der Erfindung bildet das elastomere Rückverformungselement vorzugsweise einen Sekundärdichtring der Sekundärdichtung der axial beweglichen Gleitringanordnung aus Gleitringträger und zugehörigem Gleitring. Das elastomere Rückverformungselement bzw. der erste Sekundärdichtring ist vorzugsweise als elastomerer Quadring, manchmal auch als X-Ring bezeichnet, ausgebildet. Die Sekundärdichtung ermöglicht demnach eine axiale Verschiebung der Statorgleitringanordnung, um die Gleitringdichtung zu schließen und zu öffnen, also die axialen Dichtflächen der beiden Gleitringe in Kontakt zu bringen und wieder zu trennen, so dass, insbesondere für einen sicheren drucklosen Trockenlauf, ein Luftspalt zwischen den Dichtflächen entsteht.

Die Sekundärdichtung umfasst vorzugsweise einen zweiten Sekundärdichtring.

Vorzugsweise verläuft in dem stationären Gehäuseteil ein Steuerkanal, welcher an einen Außendurchmesser der axial beweglichen Statorgleitringanordnung mündet, um die axial bewegliche Statorgleitringanordnung an ihrem Außendurchmesser mit fluidem Medium druckzubeaufschlagen, insbesondere um das Belastungsverhältnis zu verändern. Der erste und zweite Sekundärdichtring sind vorzugsweise an axial gegenüberliegenden Seiten des Steuerkanals angeordnet, um die Statorgleitringanordnung an zwei voneinander axial beabstandeten Stellen axial verschieblich zu lagern und den Steuerkanal axial beidseits dichten.

Der zweite Sekundärdichtring kann vorzugsweise als Elastomerring, insbesondere mit einem U-förmigen Querschnitt, als sogenannter U-Cup-Ring, ausgebildet sein.

Gemäß einer Ausführungsform weisen das elastomere Rückverformungselement bzw. der Quadring und der zweite Sekundärdichtring (der Elastomerring mit U-förmigem Querschnitt), unterschiedliche Innendurchmesser auf und dichten den axial beweglichen Gleitringträger an Stellen mit unterschiedlichem Außendurchmesser.

Insbesondere ist das elastomere Rückverformungselement bzw. der Quadring zwischen dem Steuerkanal und dem, sogenannten schwebenden, Statorgleitring angeordnet und dichtet den Steuerkanal rotorseitig.

Vorzugsweise ist das elastomere Rückverformungselement bzw. der Quadring auf dem Außendurchmesser des axial beweglichen Gleitringträgers vorgespannt. Dies hat sich als vorteilhaft in Bezug auf die Beweglichkeit der Statorgleitringanordnung und die Zuverlässigkeit der Öffnung der Gleitringdichtung beim Übergang zum Trockenlauf gezeigt.

Hierzu kann ebenfalls vorteilhaft beitragen, wenn das elastomere Rückverformungselement bzw. der Quadring an seinem Außendurchmesser axial verschieblich zu dem stationären Gehäuseteil ist.

Vorzugsweise weist der stationäre Gehäuseteil eine umlaufende mit axialem Übermaß gefertigte Nut für das elastomere Rückverformungselement bzw. den Quadring auf, in welcher das elastomere Rückverformungselement bzw. der Quadring beherbergt ist. In der Nut hat das elastomere Rückverformungselement bzw. der Quadring ein axiales Spiel, so dass es/er sich axial relativ zu der Nut bewegen kann, was ebenfalls positiv zu der axialen Bewegung der Statorgleitringanordnung beitragen kann. Durch die Vorspannung des elastomeren Rückverformungselements bzw. Quadrings auf dem Gleitringträger, bewegen sich das elastomere Rückverformungselement bzw. der Quadring und der Gleitringträger als Einheit axial gemeinsam innerhalb des axialen Übermaßes der Nut.

Die umlaufende Nut weist vorzugsweise einen radial äußeren umlaufenden Nutgrund auf, und das elastomere Rückverformungselement bzw. der Quadring ist axial verschieblich relativ zu dem Nutgrund.

Gemäß einer Ausführungsform ist der Gleitringträger der axial beweglichen Statorgleitringanordnung als Hohlkolben ausgebildet, welcher mittels der Sekundärdichtung axial beweglich in dem stationären Gehäuseteil gelagert ist und der (sogenannte schwebende) Statorgleitring ist an der rotorseitigen Stirnseite des Hohlkolbens befestigt, z.B. geklebt, geschrumpft, verpresst oder verschraubt. Das elastomere Rückverformungselement bzw. der Quadring ist vorzugsweise auf dem Außendurchmesser des Hohlkolbens mit geringer Vorpressung vorgespannt.

Vorzugsweise weist der Hohlkolben zwei axiale Bereiche mit unterschiedlichem Wirkdurchmesser oder Außendurchmesser auf und das Medium beaufschlagt den größeren der beiden Wirkdurchmesser über den Steuerkanal mit Mediumsdruck. Ferner umfasst der Steuerkanal vorzugsweise eine um den Hohlkolben umlaufende Steuerkanalnut, um den Hohlkolben umlaufend mit Mediumsdruck zu beaufschlagen. Die umlaufende Steuerkanalnut ist mit der Nut des elastomeren Rückverformungselements bzw. Quadrings fluidmäßig verbunden, so dass bei Druckbeaufschlagung des Steuerkanals mit insbesondere flüssigem Medium das elastomere Rückverformungselement bzw. der Quadring auf seiner dem Rotor abgewandten axialen Stirnseite mit dem Mediumsdruck beaufschlagt wird, so dass der Mediumsdruck eine axiale Kraft auf die dem Rotor abgewandte axiale Stirnseite des elastomeren Rückverformungselements bzw. Quadrings in Richtung des Rotors bewirkt. Mittels dieser vom Mediumsdruck bewirkten axialen Kraft kann das elastomere Rückverformungselement bzw. der Quadring gegen die rotorseitige Ringwandung der Nut gepresst werden. Dabei kann sich das elastomere Rückverformungselement bzw. der Quadring, insbesondere die dem Rotor abgewandte gekrümmte axiale Stirnseite des elastomeren Rückverformungselements bzw. Quadrings, elastisch verformen und bei Wegfall des Mediumsdrucks kann die Rückstellkraft zur axialen Bewegung weg vom Rotor beitragen, um die Gleitringdichtung wieder zu öffnen.

Es kann vorteilhaft sein, wenn zumindest die dem Rotor abgewandte axiale Stirnseite und/oder die dem Rotor zugewandte axiale Stirnseite des elastomeren Rückverformungselements im entspannten Zustand konkav geformt sind. Dadurch kann der Mediumsdruck gut an dem elastomeren Rückverformungselement angreifen und das elastomere Rückverformungselement verformt sich geeignet an der rotorseitigen radialen Ringwandung der Nut.

Vorzugsweise liegt unter Druckbeaufschlagung mit Medium die dem Rotor zugewandte axiale Stirnseite des elastomeren Rückverformungselements zumindest mit zwei Dichtlippen ringförmig an einer rotorseitigen Wandung des stationären Gehäuseteils an und/oder bei Druckentlastung drückt sich das elastomere Rückverformungselement durch elastische Rückverformung der zumindest zwei Dichtlippen von der rotorseitigen Wandung des stationären Gehäuseteils wieder ab.

Vorzugsweise ist der Innenumfang des elastomeren Rückverformungselements konkav geformt, so dass das elastomere Rückverformungselement an zumindest zwei axialen Stellen ringförmig an dem Hohlkolben nach Art einer doppelten Lippendichtung vorgespannt anliegt, wenn das elastomere Rückverformungselement auf dem Außenumfang des Hohlkolbens vorgespannt ist. Zweckmäßig ist das elastomere Rückverformungselement im Querschnitt vierseitig konkav geformt und/oder hat abgerundete Ecken. Dadurch kann eine gute Haftung zwischen dem elastomeren Rückverformungselement und dem Hohlkolben erzielt werden, und eine zuverlässige Pop-Off®-Funktion gewährleistet werden.

Zusammenfassend kann also unter Druckbeaufschlagung mit einem insbesondere flüssigen Medium die axial bewegliche Statorgleitringanordnung mit dem (sogenannten schwebenden) Statorgleitring gegen den Rotorgleitring gepresst werden, um die Gleitringdichtung mit der erforderlichen Dichtigkeit, insbesondere für flüssige Medien zu versehen und das elastomere Rückverformungselement bzw. der Quadring erfährt dabei eine elastische Verformung seines Ringquerschnitts. Unter Drucklosstellung trägt die von der elastischen Verformung des Ringquerschnitts bewirkte Rückstellkraft zumindest dazu bei, dass sich die axial bewegliche Statorgleitringanordnung mit dem Statorgleitring von dem Rotorgleitring löst, so dass ein Luftspalt zwischen dem Statorgleitring und dem Rotorgleitring entstehen kann, z.B. um einen reibungsfreien Trockenlauf der Drehdurchführung zu ermöglichen. Dadurch kann die Pop-Off®-Eigenschaft der Gleitringdichtung verbessert werden.

Vorzugsweise enthält das Material des elastomeren Rückverformungselements bzw. des elastomeren Quadrings ein Fluorelastomer, z.B. Viton®.

Mit anderen Worten umfasst die Drehdurchführung einen Quadring, insbesondere als Sekundärdichtring der Sekundärdichtung, mittels welcher die Gleitringanordnung in dem stationären Gehäuseteil axial beweglich gelagert und gedichtet ist. Der Quadring wird bei Druckbeaufschlagung mit flüssigem Medium von dem Mediumsdruck axial gegen eine rotorseitige Wandung des stationären Gehäuseteils gepresst und verformt sich dabei elastisch. Bei Druckentlastung rückverformt sich der Quadring und drückt sich durch die elastische Rückverformung von der Wandung ab. Dabei zieht der sich rückverformende Quadring die Gleitringanordnung vom Rotor weg, wobei sich die Gleitringdichtung öffnet.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

Kurzbeschreibung der Figuren

Es zeigen:

Fig. 1      einen Längsschnitt durch eine Drehdurchführung gemäß einer Ausführungsform der Erfindung mit geschlossener Gleitringdichtung,

Fig. 2      eine Ausschnittsvergrößerung des Ausschnitts A in Fig. 1,

Fig. 3      einen Längsschnitt durch die Drehdurchführung aus Fig. 1 mit geöffneter Gleitringdichtung,

Fig. 4      eine Ausschnittsvergrößerung des Ausschnitts B aus Fig. 3,

Fig. 5      einen Querschnitt entlang der Linie 5-5 in Fig. 3,

Fig. 6      einen Querschnitt entlang der Linie 6-6 in Fig. 3,

Fig. 7      einen Querschnitt entlang der Linie 7-7 in Fig. 3,

Fig. 8      eine axiale Frontalansicht von der Spindelseite auf die Durchführung aus den Fig. 1-4,

Fig. 9　eine axiale Frontalansicht von der stationären Gehäuseseite auf die Drehdurchführung aus den Fig. 1-4,

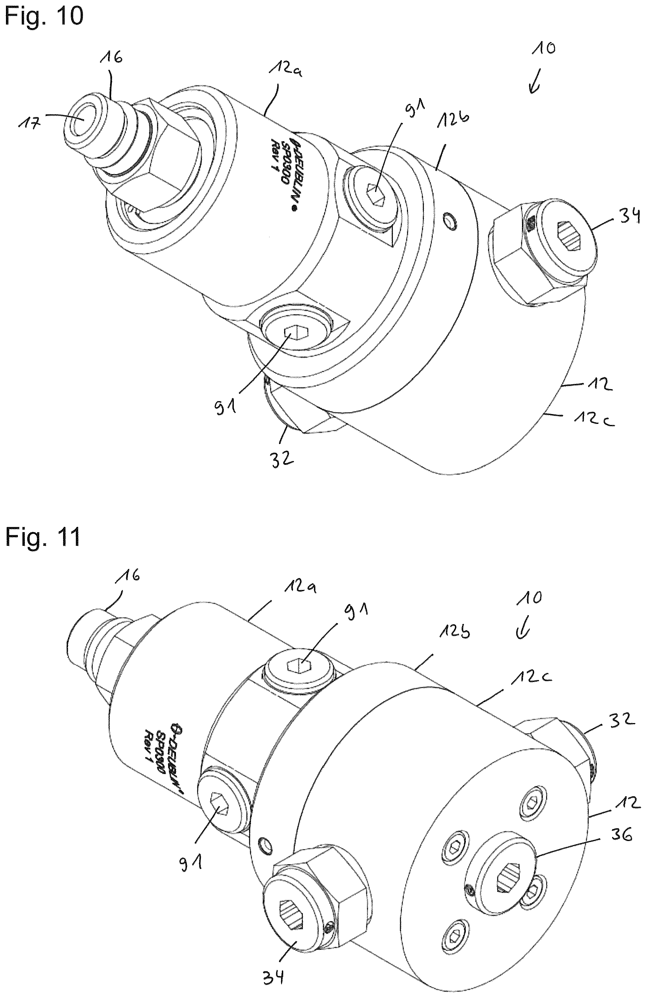

Fig. 10　eine dreidimensionale Ansicht von schräg vorne auf die Drehdurchführung aus den Fig. 1-4,

Fig. 11　eine dreidimensionale Ansicht von schräg hinten auf die Drehdurchführung aus den Fig. 1-4,

Fig. 12　einen Längsschnitt durch die Drehdurchführung aus den Fig. 1-11, angeflanscht an eine Spindel und mit Fluid-Schaltplan für die Druckbeaufschlagung mit fluiden Medien,

Fig. 13　eine dreidimensionale Ansicht von schräg vorne einer Drehdurchführung gemäß einer weiteren Ausführungsform der Erfindung,

Fig. 14　eine dreidimensionale Ansicht von schräg hinten der Drehdurchführung aus Fig. 13,

Fig. 15　einen Längsschnitt durch die Drehdurchführung aus Fig. 13 bis 14 mit einer Lanze für Mindermengen- bzw. Minimalmengenschmierung,

Fig. 16　eine Frontalansicht von der stationären Gehäuseseite auf die Drehdurchführung aus Fig. 15,

Fig. 17　einen Längsschnitt durch eine Drehdurchführung einer Ausführungsform der Erfindung mit geschlossener Gleitringdichtung unter Druckbeaufschlagung mit flüssigem Medium,

Fig. 18　eine Ausschnittsvergrößerung des Ausschnitts C in Fig. 17,

Fig. 19　ein weiter vergrößerter Ausschnitt D aus Fig. 18,

Fig. 20　wie Fig. 18, jedoch unter Drucklosstellung mit geöffneter Gleitringdichtung,

Fig. 21　ein weiter vergrößerter Ausschnitt E aus Fig. 20,

Fig. 22　eine schematische Darstellung eines ausschnittsweisen Längsschnitts einer Gleitringanordnung zur Erläuterung des Belastungsverhältnisses bei axialen Gleitringdichtungen.

## Detaillierte Beschreibung der Erfindung

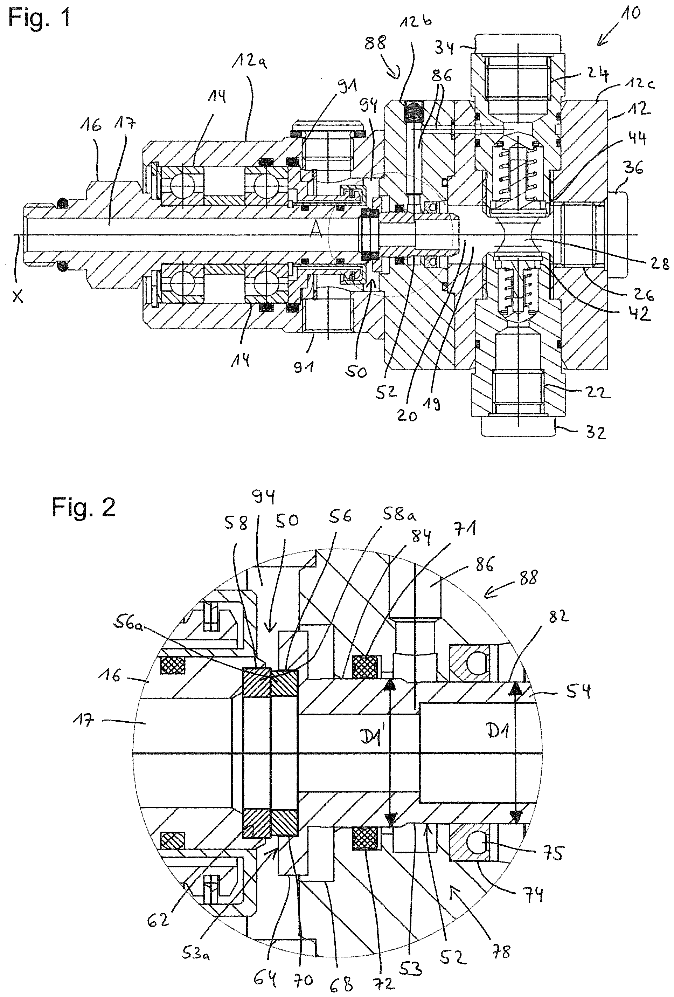

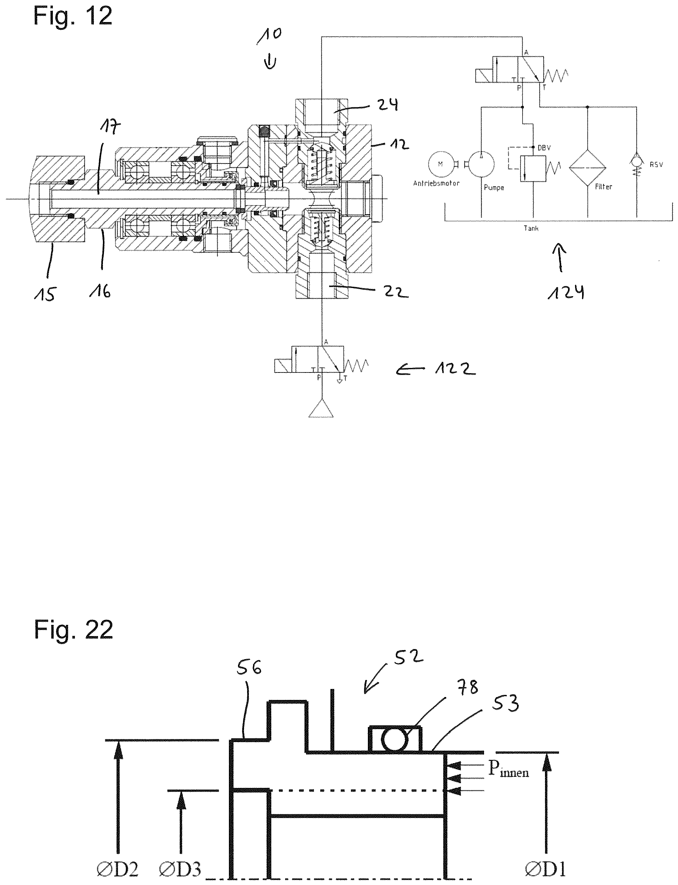

Bezugnehmend auf die Fig. 1-4 weist die Durchführung 10 rückwärtig einen stationären Gehäuseteil 12 auf, welcher im vorliegenden Beispiel mehrteilig ausgebildet ist. Ein Rotor 16 zur Verbindung mit einer Maschinenspindel 15 (vgl. Fig. 12), in diesem Beispiel in Form einer Hohlwelle, ist mit Wälzlagern, z.B. Kugellagern 14 rotierend in dem Gehäuseteil 12 gelagert. Die Drehdurchführung 10 weist in diesem Beispiel erste und zweite radiale Medieneinlasskanäle 22, 24 mit unterschiedlichen Eigenschaften sowie einen dritten axialen Medieneinlasskanal 26 auf. Jeder der Medieneinlasskanäle 22, 24, 26 besitzt jeweils einen Anschlussport 32, 34, 36, z.B. mit einer Schnellkupplung zum Verbinden mit geeigneten Schlauch- oder Rohrsystemen, um die gewünschten fluiden Medien in den stationären Gehäuseteil 12 der Drehdurchführung 10 unter Druckbeaufschlagung einzuleiten. Dabei werden die Medieneinlasskanäle 22, 24, 26 vorzugsweise alternativ und nicht gleichzeitig mit Medium druckbeaufschlagt. Die beiden radialen Medieneinlasskanäle 22, 24 weisen jeweils ein Rückschlagventil 42, 44 auf, um diese gegeneinander und gegenüber Druckbeaufschlagung des dritten Medieneinlasskanals 26 zu sperren.

Sowohl die beiden radialen Medieneinlasskanäle 22, 24 als auch der axiale Medieneinlasskanal 26 münden an einem Fluid-Verbindungsknoten 28 in einen Arbeitsraum 19 in dem stationären Gehäuseteil 12. Der Arbeitsraum 19 umfasst in diesem Beispiel einen zur Rotationsachse X koaxialen inneren Fluidkanal 20, sodass alternativ bzw. wechselweise über jeden der drei Anschlussports 32, 34, 36 bzw. Medieneinlasskanäle 22, 24, 26 verschiedene fluide Medien in den inneren Fluidkanal 20 des stationären Gehäuseteils 12 druckbeaufschlagt eingeleitet werden können.

Der axiale Medieneinlasskanal 26 eignet sich insbesondere für eine Mindermengen- bzw. Minimalmengenschmierung. Dieser Medieneinlasskanal 26 verläuft ausschließlich axial ohne erhebliche Richtungsänderungen für das fluide Medium, wodurch eine unerwünschte Entmischung des für die Mindermengen- bzw. Minimalmengenschmierung verwendeten Aerosols weitgehend vermieden werden kann. Ferner sind in der axialen Medienzuführung keine Abzweige vorhanden und es werden keine Rückschlagventile verwendet, was ebenfalls zur Vermeidung von unerwünschter Entmischung des Aerosols beiträgt. Der axiale Medieneinlasskanal kann sich allerdings z.B. auch für Druckluftbetrieb oder ggf. auch für Kühlschmierstoff (KSS) eignen.

Die beiden radialen Medieneinlasskanäle 22, 24 weisen jeweils ein integriertes Rückschlagventil 42, 44 auf, sodass der Nutzer in diesen Medienzuführungen keine weiteren externen Rückschlagventile vorzusehen braucht. Der radiale erste Medieneinlasskanal 22 kann insbesondere für den Druckluftbetrieb ausgelegt sein, er kann sich allerdings auch für die Druckbeaufschlagung mit Kühlschmierstoff (KSS) eignen. Der radiale zweite Medieneinlasskanal 24 ist insbesondere für die Druckbeaufschlagung mit einem höher viskosen Medium, wie z.B. Schneidöl oder Hydrauliköl, ausgelegt, kann sich allerdings auch für ein niedriger viskoses flüssiges Medium, wie z.B. Kühlschmierstoff (KSS) eignen.

Der stationäre Gehäuseteil 12 und der Rotor 16 sind mittels einer axialen Gleitringdichtung 50 gedichtet. Die Gleitringdichtung 50 umfasst eine Gleitringanordnung 52 mit einem axial verschieblichen Gleitringträger 53 und einem an dem Gleitringträger 53 befestigten Gleitring 56. Der Gleitring 56 des Stators oder kurz Statorgleitring 56 dichtet mit seiner rotorseitigen axialen ringförmigen Dichtfläche 56a gegen eine rückwärtige axiale ringförmige Dichtfläche 58a des komplementären Gleitrings 58 des Rotors 16. Der Gleitring 58 des Rotors 16 oder kurz Rotorgleitring 58 ist an der statorseitigen Stirnseite 16a des Rotors 16 befestigt, in diesem Beispiel in eine Ringnut 62 eingepresst und/oder eingeklebt.

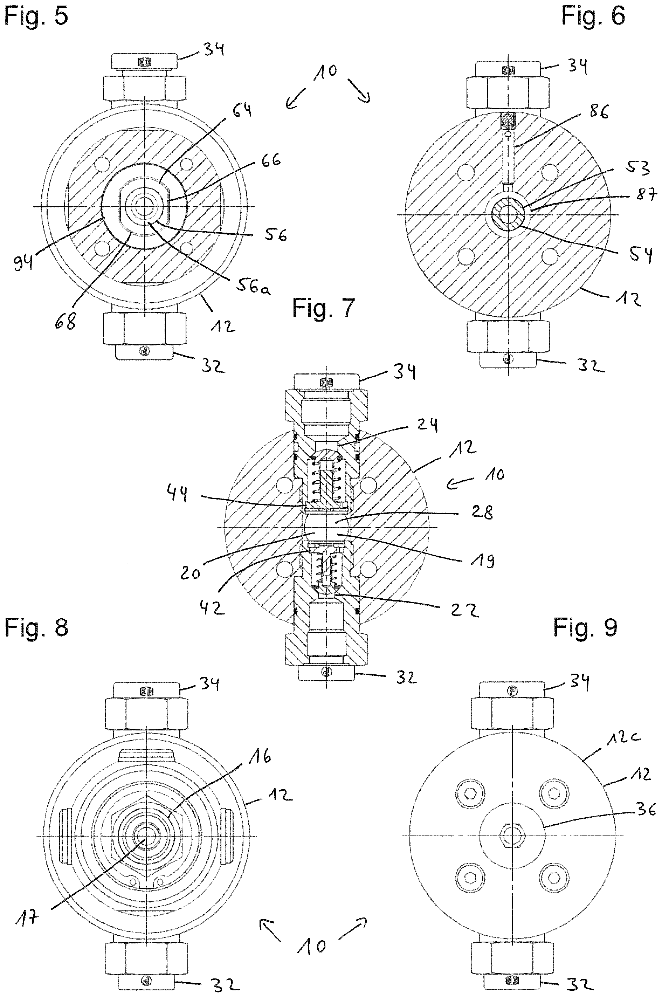

Der Gleitringträger 53 des Statorgleitrings 56 ist beispielsweise als Hohlkolben 54 ausgebildet und weist in diesem Beispiel einen rotorseitigen Flansch 64 auf, der beispielsweise mittels Abflachungen 66 (vgl. Fig. 5) verdrehsicher, aber axial beweglich, in dem stationären Gehäuseteil 12 angeordnet, z.B. in einer korrespondierenden rotorseitigen Aussparung 68 in dem stationären Gehäuseteil 12 verdrehsicher beherbergt ist. Die Gleitringanordnung 52 bzw. der Hohlkolben 54 können allerdings auch mit Stiften, Nuten oder sonstigen Mitteln gegen Verdrehung gesichert sein.

Der Statorgleitring 56 ist stirnseitig am rotorseitigen Ende 53a des Gleitringträgers 53 bzw. Hohlkolbens 54 befestigt, z.B. eingepresst oder geklebt, wobei jedoch auch andere Befestigungstechniken möglich sind. Im vorliegenden Beispiel ist der Statorgleitring 56 beispielhaft in einer Aussparung 70 des Gleitringträgers 53, genauer des Flansches 64, dauerhaft befestigt.

Die Gleitringe 56, 58 bestehen vorzugsweise beide aus Siliziumkarbid, sodass häufig von einer SiC-SiC-Gleitringdichtung 50 gesprochen wird. Eine SiC-SiC-Gleitringdichtung 50 ist langlebig und weist hervorragende Dichteigenschaften im Betrieb mit flüssigen gut schmierenden Medien auf. Manche herkömmliche Drehdurchführungen haben jedoch bei Betrieb mit Druckluft oder im Trockenlauf mit Siliziumkarbiddichtungen Standfestigkeitsprobleme. SiC-Gleitringe können z.B., wenn sie ohne Schmiermittel laufen und nicht hinreichend voneinander getrennt sind, überhitzen, was bis zum Totalausfall der Drehdurchführung führen kann. Es können allerdings auch andere Materialien für die Gleitringe 56, 58, wie z.B. Carbon-Graphite (CG), also z.B. eine CG-SiC-Gleitringdichtung in Betracht gezogen werden.

Wieder Bezugsnehmend auf die Fig. 1-4 ist die Gleitringanordnung 52 des Stators oder kurz Statorgleitringanordnung 52 bzw. ist der Hohlkolben 54 in dem stationären Gehäuseteil 12 axial verschieblich gelagert, und zwar mittels einer Sekundärdichtung 78. Die Sekundärdichtung 78 umfasst in diesem Beispiel erste und zweite Sekundärdichtringe 72, 74 in Form von zwei elastomeren Ringdichtungen. Die rotorseitige erste elastomere Ringdichtung 72 ist im vorliegenden Beispiel als ein elastomerer Quadring 72, z.B. aus einem Fluorelastomer, wie Viton® gebildet. Die statorseitige oder rückwärtige elastomere zweite Ringdichtung 74 weist im vorliegenden Beispiel einen U-förmigen Querschnitt mit einer rückwärtig oder hochdruckseitig offenen Nut 75 auf.

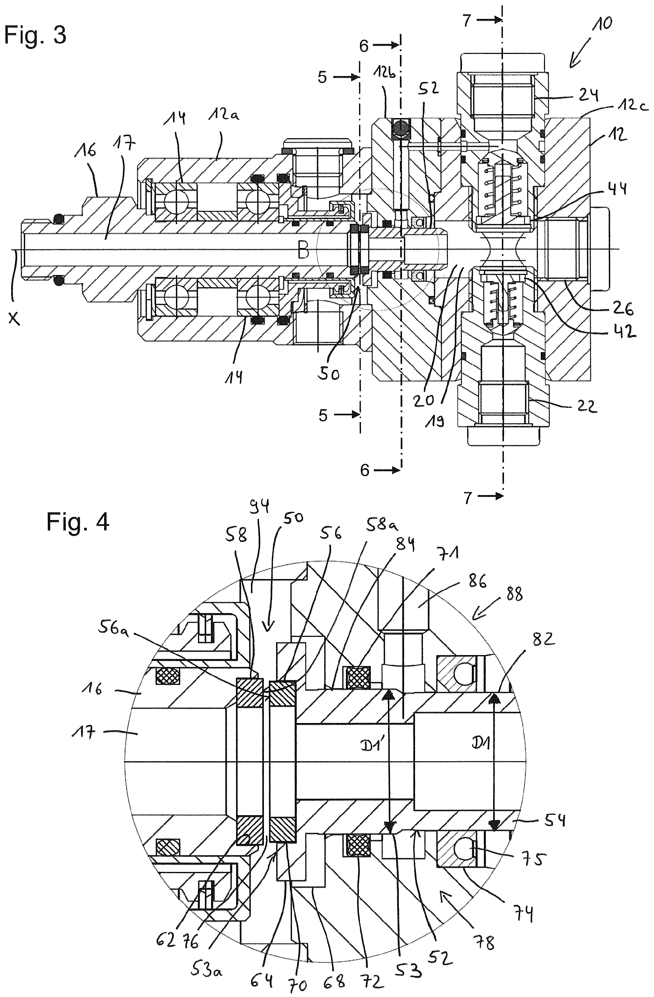

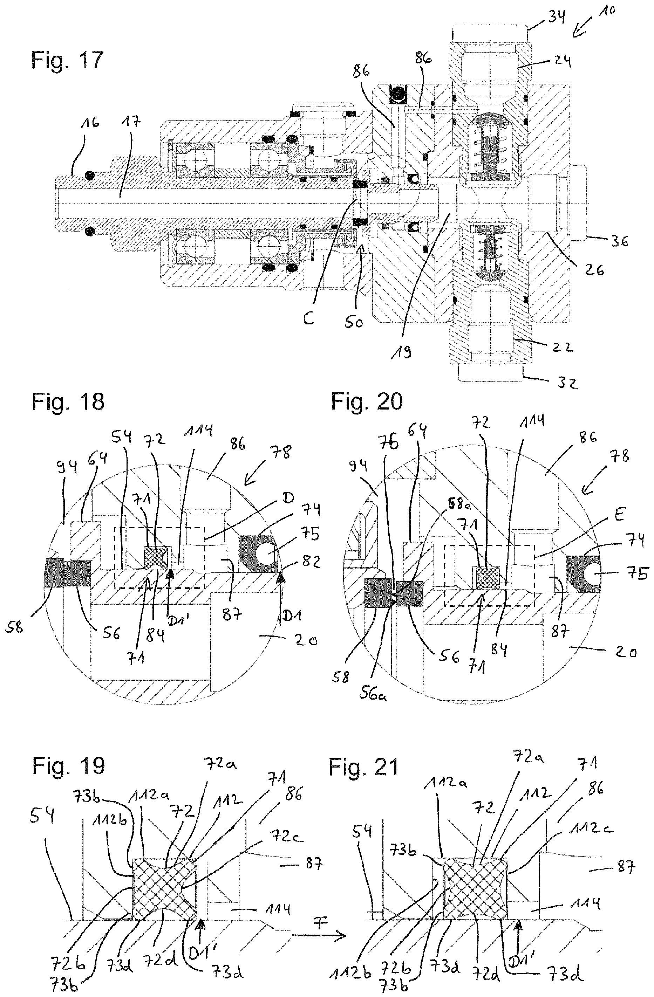

Die Lagerung des Hohlkolbens 54 mittels der beiden elastomeren Ringdichtungen 72, 74 ermöglicht der Statorgleitringanordnung 52 bzw. dem Statorgleitring 56 eine begrenzte axiale Beweglichkeit, um die axiale Gleitringdichtung 50 schließen (Fig. 1, 2) und wieder öffnen (Fig. 3, 4) zu können. Typischerweise ist die Gleitringdichtung 50 beim Betrieb mit druckbeaufschlagten fluiden Medien mit flüssigen Schmierstoffanteilen, wie zum Beispiel KSS, Schneidöl oder Hydrauliköl, geschlossen, sodass allenfalls eine minimale ggf. tröpfchenweise Leckage (Schwitzen) anfällt. Solche Medien sorgen bei geschlossener Gleitringdichtung 50 für ausreichend Schmierung zwischen den beiden Siliziumcarbid-Gleitflächen 56a, 58a. Im Trockenlauf oder im Druckluftbetrieb im geschlossenen Zustand könnten die beiden Siliziumcarbid-Gleitringe 56, 58 aneinander reiben und sich übermäßig erwärmen. Daher öffnet die Gleitringdichtung 50 bei Drucklosstellung oder im Druckluftbetrieb, indem der Hohlkolben 54 mit dem Statorgleitring 56, d.h. die Statorgleitringanordnung 52, sich von dem Rotorgleitring 58 löst und geringfügig axial von diesem axial wegbewegt, in den vorliegenden Figuren also nach rechts, so dass ein Dichtungsspalt 76 zwischen den Gleitringen 56, 58 entsteht (vgl. Fig. 4, 20).

Die beiden elastomeren Ringdichtungen 72, 74 bilden gemeinsam die Sekundärdichtung 78 des stationären Teils der Drehdurchführung 10. Die elastomere Sekundärdichtung 78 erfüllt somit eine Doppelfunktion für die Statorgleitringanordnung 52, nämlich als axial verschiebliche Lagerung einerseits und als Dichtung gegenüber der Druckbeaufschlagung mit fluidem Medium von der stationären Seite andererseits.

Die Statorgleitringanordnung 52 weist aufgrund der Lagerung mittels der elastomeren Dichtringe 72, 74 ggf. auch eine geringfügige Verkippbarkeit auf, sodass die Dichtflächen 56a, 58a der beiden Gleitringe 56, 58 im druckbeaufschlagten Zustand perfekt plan aneinander liegen und eine entsprechend gute Dichtung erzeugen können. Ein solcher axial verschieblich gelagerter und ggf. geringfügig verkippbarer Statorgleitring 56 wird in der Fachwelt auch als schwebender Gleitring bezeichnet.

Bezugnehmend auf die Fig. 3 und 4 besteht in dem geöffneten Zustand der Gleitringdichtung 52 ein Dichtungsspalt 76 zwischen den Gleitringen 56, 58, wobei der Dichtungsspalt 76 zur besseren Veranschaulichung in den Fig. 3 und 4 übertrieben dargestellt sein kann. In dem geöffneten Zustand der Gleitringdichtung 50 entsteht somit zwar z.B. im Druckluftbetrieb eine gewisse Leckagerate, die bei dem vorliegenden Ausführungsbeispiel etwa 15-20 Normlitern pro Minute betragen kann, mithin aber erheblich geringer ist, als bei manchen herkömmlichen Drehdurchführungen. Ferner weist die vorliegende Drehdurchführung 10 ausgezeichnete Trockenlaufeigenschaften auf, da im Trockenlauf eine übermäßige Erwärmung der Gleitringe 56, 58 vermieden werden kann. Die Drehdurchführung kann daher weitgehend unbegrenzt mit hohen Drehzahlen drucklos im Trockenlauf, aber auch mit Druckluft betrieben werden.

Bezugnehmend auf Fig. 22 wird das Belastungsverhältnis B eines schwebenden Gleitrings durch das Flächenverhältnis $F_H/F$ von hydraulisch oder pneumatisch belasteter Fläche $F_H$ zur Kontaktfläche F zwischen den beiden Gleitringen 56, 58 definiert. Somit lässt sich das Belastungsverhältnis B anhand der Durchmesser D1, D2 und D3 geometrisch wie folgt berechnen:

$$B = \frac{F_H}{F} = \frac{D1^2 - D3^2}{D2^2 - D3^2}$$

wobei D1 der Außendurchmesser bzw. Wirkdurchmesser des druckbelasteten Gleitringträgers, D2 der Außendurchmesser der Kontaktfläche der Gleitringdichtung und D3 der Innendurchmesser der Kontaktfläche der Gleitringdichtung ist.

Wieder bezugnehmend auf die Fig. 1 bis 4 ist der Hohlkolben 54 als ein Stufenkolben ausgebildet, weist mithin einen statorseitigen ersten axialen Bereich 82 mit einem ersten Außendurchmesser D1 und einen rotorseitigen zweiten axialen Bereich 84 mit einem größeren zweiten Außendurchmesser D1' (D1' > D1) auf.

Ein Steuerkanal 86 ist intern verschaltet und zweigt in dem stationären Gehäuseteil 12 von dem zweiten Medieneinlasskanal 24 ab. Insbesondere zweigt der Steuerkanal 86 vor dem Rückschlagventil 44 bzw. hochdruckseitig des Rückschlagventils 44 von dem radialen zweiten Medieneinlasskanal 24 ab. Der Steuerkanal 86 ist also in dem stationären Gehäuseteil 12 integriert, z.B. als Bohrung(en), und zweigt innerhalb der Drehdurchführung 10 von dem Medieneinlasskanal 24 ab. Dadurch wird der interne Steuerkanal 86 zuverlässig drucklos geschaltet, sobald das insbesondere flüssige Medium an dem zweiten Medieneinlasskanal 24 abgeschaltet wird.

Der Steuerkanal 86 verläuft innerhalb des stationären Gehäuseteils 12, im vorliegenden Beispiel zunächst axial in Richtung der Rotorseite und anschließend radial nach innen in Richtung des Hohlkolbens 54. Schließlich mündet der Steuerkanal 86 an der umlaufenden Außenseite des Hohlkolbens 54 und ist derart angeordnet, dass über den Steuerkanal 86 der größere zweite Außendurchmesser D1' des Hohlkolbens 54 mit dem in den zweiten Medieneinlasskanal 24 eingeleiteten Medium ebenfalls druckbeaufschlagt wird. Hierzu besteht eine Fluidverbindung zwischen dem Steuerkanal 86 und dem zweiten axialen Bereich 84 mit dem Außendurchmesser D1' des Hohlkolbens 54. Eine druckbeaufschlagte Einleitung von fluidem Medium über den Anschlussport 34 in den Medieneinlasskanal 24 führt daher nicht nur zur druckbeaufschlagten Einleitung des fluiden Mediums in den inneren Fluidkanal 20 und den Rotorfluidkanal 17, sondern druckbeaufschlagt automatisch auch den zweiten axialen Bereich 84 mit dem Außendurchmesser D1' des Hohlkolbens 54. Damit wird in Bezug auf das Belastungsverhältnis der größere Außendurchmesser oder Wirkdurchmesser D1' des Hohlkolbens 54 aktiviert. Somit bildet der Gleitringträger 53 bzw. der Stufenkolben 54 zusammen mit dem Steuerkanal 86 eine hydraulisch bzw. pneumatisch gesteuerte Umschalteinrichtung 88 für das Belastungsverhältnis der Gleitringdichtung 50.

Wenn der erste Medieneinlasskanal 22 oder der axiale Medieneinlasskanal 26 mit fluidem Medium druckbeaufschlagt wird, weist die Gleitringdichtung 50 demnach das kleinere Belastungsverhältnis B auf, welches durch den kleineren Außendurchmesser D1 in dem ersten axialen Bereich 82 des Hohlkolbens 54 bestimmt wird. Wird stattdessen der Medieneinlasskanal 24 mit fluidem Medium druckbeaufschlagt, aktiviert dies über den Steuerkanal 86 den größeren Außendurchmesser D1' in dem rotorseitigen zweiten axialen Bereich 84 des Hohlkolbens 54, sodass sich ein zweites anderes, und zwar im vorliegenden Beispiel größeres Belastungsverhältnis B' einstellt, welches wie folgt berechnet wird:

$$B' = \frac{F'_H}{F} = \frac{D1'^2 - D3^2}{D2^2 - D3^2} > B$$

Je nachdem, ob einer der Medieneinlasskanäle 22, 26 ohne Steuerkanal oder der Medieneinlasskanal 24 mit dem Steuerkanal 86 mit fluidem Medium druckbeaufschlagt wird, weist die Gleitringdichtung demnach ein anderes Belastungsverhältnis, nämlich einmal B und einmal B' auf. Mit anderen Worten ist jedem Medieneinlasskanal ein bestimmtes Belastungsverhältnis zugeordnet bzw. verschiedenen Medieneinlasskanälen sind unterschiedliche Belastungsverhältnisse zugeordnet. Demnach kann durch die Wahl des entsprechenden Ports bzw. Medieneinlasskanals das Belastungsverhältnis der Gleitringdichtung ausgewählt und automatisch hydraulisch oder pneumatisch eingestellt bzw. die Gleitringdichtung 50 zwischen den unterschiedlichen Belastungsverhältnissen B und B' umgeschaltet werden.

Das erste Belastungsverhältnis B das den Medieneinlasskanälen 22, 26 zugeordnet ist, ist dabei für fluide Medien mit geringerer Viskosität ausgewählt und insbesondere geeignet für Druckluft, Mindermengen- bzw. Minimalmengenschmierung und ggf. Kühlschmierstoff (KSS) und beträgt im vorliegenden Beispiel etwa 0,52 +/- 0,02. Hiermit kann ferner die Leckagerate für Druckluft geringgehalten werden. Das erste Belastungsverhältnis B kann jedoch auch etwas breiter im Bereich von 0,45 bis 0,6, vorzugsweise im Bereich von 0,47 bis 0,57, vorzugsweise im Bereich von 0,49 bis 0,55 betragen.

Das größere zweite Belastungsverhältnis B', welches dem zweiten Medieneinlasskanal 24 zugeordnet ist und automatisch bei Druckbeaufschlagung des zweiten Medieneinlasskanals 24 über den zweiten Anschlussport 34 vorliegt, wird von dem größeren Außendurchmesser D1' definiert und beträgt in dem vorliegenden Beispiel etwa 0,66 +/- 0,02. Das zweite Belastungsverhältnis B' ist dabei für fluide Medien mit höherer Viskosität ausgewählt, wie z.B. Schneidöl mit Viskositäten von etwa 6 $mm^2$/s bis 18 $mm^2$/s oder höher und Hydrauliköl mit Viskositäten im Bereich von 32 $mm^2$/s oder höher, kann allerdings auch noch für Kühlschmierstoff mit Viskositäten im Bereich von 1 $mm^2$/s bis 3 $mm^2$/s geeignet sein. Mithin sind die fest mit dem erstem Belastungsverhältnis verknüpften Medieneinlasskanäle 22 und 26 für kompressible Medien, insbesondere gasförmige Medien, wie Druckluft und aerosole Medien, wie zum Beispiel Mindermengen- oder Minimalmengenschmierung, sowie niedriger viskose flüssige Medien, wie Kühlschmierstoff bis zu wenigen mm$^2$/s geeignet, wohingegen der zweite Medieneinlasskanal 24 mit dem hiermit fest verknüpften zweiten Belastungsverhältnis B' besonders geeignet ist für flüssige Medien mit Viskositäten von wenigen mm$^2$/s bis zu 60 mm$^2$/s oder mehr. Das zweite Belastungsverhältnis B' kann jedoch auch etwas breiter, nämlich größer als 0,6, vorzugsweise im Bereich von 0,62 bis 1, vorzugsweise im Bereich von 0,65 bis 0,7 betragen.

Wie vorstehend bereits ausgeführt wurde, besteht jeweils eine feste Zuordnung zwischen bestimmten Medieneinlasskanälen 22, 24, 26 und bestimmten Belastungsverhältnissen B, B', was den Anschluss durch den Benutzer erheblich vereinfacht. Der Nutzer schließt zum Beispiel Druckluft an den ersten Anschlussport 32, Hydrauliköl oder KSS an den zweiten Anschlussport 34 und/oder Mindermengen- bzw. Minimalmengenschmierung an den axialen dritten Anschlussport 36 an und kann weitgehend auf eine externe Rohrverteilung mit externen Rückschlagventilen und weiteren Ventilen verzichten, wie dies z.B. in Fig. 12 zu sehen ist, wo beispielhaft der erste Medieneinlasskanal 22 mit einer Kühlschmierstoffversorgungseinheit 122 und der zweite Medieneinlasskanal 24 mit einer Hydraulikölversorgungseinheit 124 beschaltet sind. Insbesondere die örtliche Trennung der verschiedenen fluiden Medien mittels verschiedener Medieneinlasskanäle in Kombination mit einer festen Zuordnung der verschiedenen Belastungsverhältnisse B, B' zu den entsprechenden Medieneinlasskanälen kann die Beschaltung durch den Benutzer vereinfachen. Unter anderem braucht der Benutzer keine externen Steuerleitungen mit verschiedenen Medien miteinander zu verschalten.

Andererseits weist die Drehdurchführung 10 für unterschiedliche fluide Medien unterschiedliche Belastungsverhältnisse auf, sodass eine geringe Leckagerate, bei flüssigen Medien insbesondere im Wesentlichen leckagefrei, hohe Standfestigkeit und geringer Verschleiß trotz Beaufschlagung mit sehr unterschiedlichen Medien sowie im Trockenlauf gewährleistet ist. Daher kann die Drehdurchführung 10 zu Recht als multimedientaugliche Drehdurchführung, sogar als allmedientaugliche Drehdurchführung oder Universal-Drehdurchführung bezeichnet werden.

Die Medieneinlasskanäle 22, 24 insbesondere für flüssige Medien und gasförmige Medien sind durch die internen Rückschlagventile 42, 44 gegeneinander verriegelt. Durch die interne Verriegelung mit den beiden internen Rückschlagventilen 42, 44 können eine aufwändige externe Verschaltung und weitere externe Rückschlagventile weitgehend vermieden werden. Die Drehdurchführung 10 kommt, dort wo erforderlich, mit einem einzigen Rückschlagventil 42, 44 pro Medieneinlasskanal 22, 24 aus. Die integrierten Rückschlagventile 42, 44 in den radialen Medieneinlasskanälen 22, 24 tragen weiter zur Vereinfachung für den Benutzer bei.

Darüber hinaus entsperrt der Steuerkanal 86 automatisch vollständig bei Entlastung des zweiten Medieneinlasskanals 24, sodass ein sicheres schnelles und präzises Umschalten von dem zweiten Belastungsverhältnis B' auf das erste Belastungsverhältnis B und umgekehrt gewährleistet ist. Ferner kann ein Nachlaufen aus den Medieneinlasskanälen vermieden werden. In weiter vorteilhafter Weise sind in der externen Zuleitung beim Einsatz von Mindermengen- bzw. Minimalmengenschmierung über den Axialport 36 weder ein externes Rückschlagventil, noch ein externes Kugelventil erforderlich.

Durch die an das jeweilige Medium angepassten unterschiedlichen Belastungsverhältnisse B, B' der verschiedenen Medieneinlasskanäle 22, 24, 26 können bei Beschaltung mit Kühlschmierstoff oder Schneidöl bzw. Hydrauliköl eine hohe Dichtigkeit der Gleitringdichtung 50 und bei Druckluftbetrieb eine relativ geringe Luftleckagerate im Bereich von 15-20 Normliter pro Minute sowie gute Trockenlaufeigenschaften und hohe Standfestigkeit miteinander in Einklang gebracht werden. Ferner kann beim Betrieb mit Kühlschmierstoff ein hoher Druck, insbesondere größer als 90 bar, gefahren werden und die Leckagerate bleibt trotzdem in einem akzeptablen Bereich, bzw. die Gleitrichtringdichtung ist im Wesentlichen leckagefrei. Das Ausführungsbeispiel kann mit flüssigen Medien KSS oder Schneidöl bis 140 bar, mit Druckluft bis 10 bar und mit MQL bis 10 bar betrieben werden.

Leckageports 91 zum Abführen einer geringfügigen verbleibenden Leckage von Kühlschmierstoff oder Schneidöl bzw. Hydrauliköl sind unter verschiedenen Winkeln vorgesehen und können je nach Einbaulage der Drehdurchführung 10 genutzt werden. An dem gewünschten Leckageport 91 kann eine Leckageanschlusskupplung 92 angeschlossen werden, um Leckageflüssigkeit aus einem Leckageraum 94 außerhalb der Gleitringdichtung 50 abzuführen.

Vorzugsweise ist der stationäre Gehäuseteil 12 als ein mehrteiliges Durchführungsgehäuse ausgebildet, sodass aufgrund des modularen Aufbaus eine einfache Adaptierbarkeit an vorhandene Gehäuseformen möglich ist. Im vorliegenden Beispiel besteht der stationäre Gehäuseteil 12 aus einem Rotorgehäuse 12a, in welchem der Rotor 16 mittels der Kugellager 14 gelagert ist, einem Zwischengehäuseteil 12b, in welchem die Statorgleitringanordnung 52 axial verschieblich gelagert ist und in welchem sich ein Teil des Steuerkanals 86 erstreckt und einem rückwärtigen Gehäuseteil 12c, in welchem sich die Medieneinlasskanäle 22, 24, 26 erstrecken. Im vorliegenden Beispiel sind die radialen Medieneinlasskanäle 22, 24 mit den integrierten Rückschlagventilen 42, 44 radial von außen in den stationären Gehäuseteil 12, genauer in den rückwärtigen Gehäuseteil 12c eingesetzt, zum Beispiel eingeschraubt.

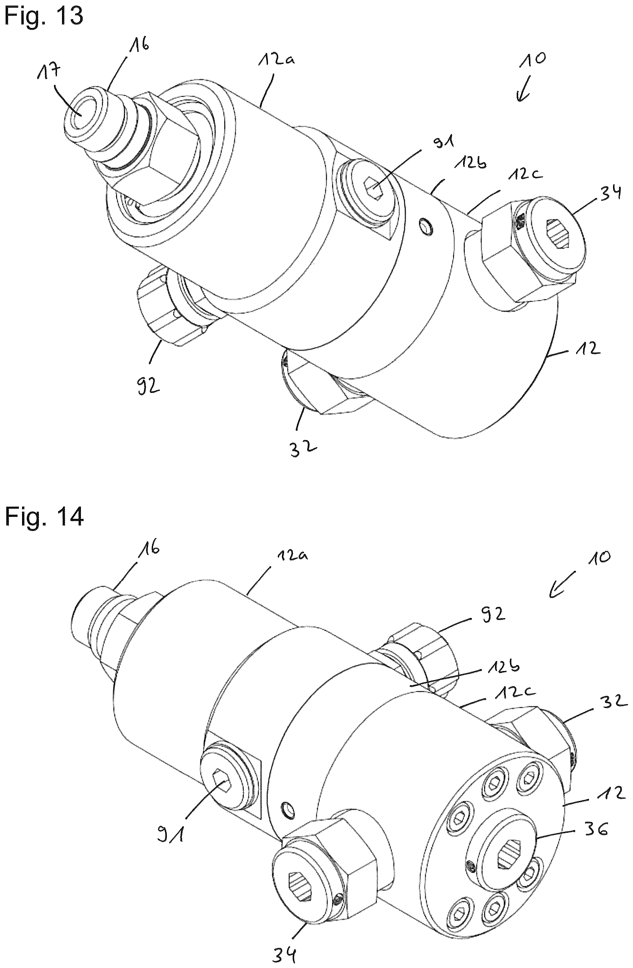

Bezugnehmend auf die Fig. 13 bis 14 ist eine etwas kleinere Ausführungsform der Drehdurchführung 10 mit schlankerem stationärem Gehäuseteil 12 dargestellt, welche sich ebenfalls zum Beispiel zum Einbau in Werkzeugmaschinen eignet.

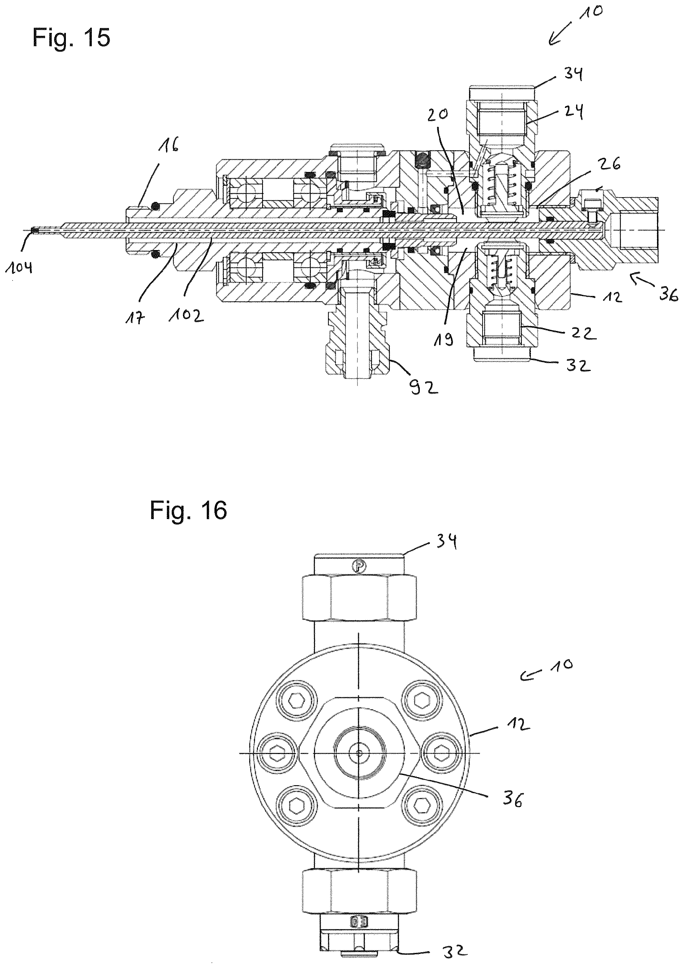

Bezugnehmend auf die Fig. 15 bis 16 kann die Durchführung 10 auch mit einer internen Mischeinrichtung zur Aerosolmischung für Mindermengen- bzw. Minimalmengenschmierung versehen werden. Hierzu wird eine Lanze 102 in den axialen Anschlussport 36 eingesteckt und z.B. verschraubt. Die Lanze 102 erstreckt sich koaxial durch den axialen Medieneinlasskanal 26 durch den inneren Fluidkanal 20 und in den Fluidkanal 17 des Rotors 16 und ragt im vorliegenden Beispiel über den Rotor 16 hinaus und bis in die Maschinenspindel 15 hinein (vgl. Fig. 12). Das Aerosol für die Mindermengen- bzw. Minimalmengenschmierung wird bei dieser beispielhaften Lanze 102 an der Lanzenaustrittsöffnung 104 gemischt, wobei das Schmiermittel über den axialen Port 36 und Druckluft über den ersten Port 32 zugeführt werden.

Bezugnehmend auf die Fig. 17 bis 21 umfasst die Sekundärdichtung 78 der Statorgleitringanordnung 52 einen rotorseitigen Quadring 72, vorzugsweise aus Viton® sowie einen statorseitigen elastomeren Dichtring 74. Der elastomere Dichtring 74 weist einen U-förmigen Querschnitt mit einer zum Arbeitsraum 19 offenen Nut 75 auf, so dass nie Nut 75 im Betrieb gespült werden kann. Der U-förmige Dichtring 74 wird auch als U-Cup-Ring 74 bezeichnet.

Bezugnehmend auf Fig. 17 bis 19 ist der Quadring 72 auf dem rotorseitigen axialen Bereich 84 des Hohlkolbens 54 mit dem Außendurchmesser D1' vorgespannt. Der Quadring 72 ist dabei in einer um den Hohlkolben 54 umlaufenden Nut 112 in dem stationären Gehäuseteil 12, insbesondere in dem Zwischengehäuseteil 12b, beherbergt. Der Quadring 72 weist zu dem Nutgrund 112a ausreichend Spiel auf, um sich bei Axialverschiebung des Hohlkolbens 54 innerhalb der mit axialem Übermaß gefertigten Nut 112 relativ zu dem stationären Gehäuseteil 12 bewegen zu können. Der Quadring oder X-Ring 72 bildet eine Lippendichtung, insbesondere eine Multi-Lippendichtung.

In dem in Fig. 17 bis 19 gezeigten druckbeaufschlagten Zustand wird der Quadring 72 von dem Hydraulikdruck gegen die rotorseitige Ringwandung 112b der Nut 112 gepresst und verformt sich dabei elastisch mit seiner im Querschnitt vierseitigen konkaven Formgebung. Insbesondere verformet sich die rotorseitige konkave Stirnseite 72b an der Wandung 112b. Der Hydraulikdruck kann dabei gut an der rotorabgewandten konkaven Stirnseite 72c des Quadrings 72 angreifen und diesen gemeinsam mit dem Hohlkolben 54 in Richtung des Rotors bewegen und den Quadring 72 elastisch verformend gegen die Ringwandung 112b pressen. Somit liegt bei Druckbeaufschlagung des zweiten Medieneinlasskanals 24 und des Steuerkanals 86 nicht nur das höheren Belastungsverhältnis B' an den beiden Gleitringen 56, 58 an, um beim Betrieb z.B. mit Schneidöl oder Hydrauliköl eine adäquate Dichtwirkung zu erzielen, sondern es wird auch der Quadring 72 durch Pressung mittels des Mediumsdrucks gegen die Seitenwandung 112b in seinem Querschnitt elastisch verformt. Hierzu ist der Steuerkanal 86 über ein Verbindungskanal 114 fluidmäßig mit der Quadring-Nut 112 verbunden, sodass der in dem Steuerkanal 86 anstehende Hydraulikdruck eine in Richtung des Rotors wirkende axiale Kraft auf den Quadring 72 ausüben kann. Der Verbindungskanal 114 ist im vorliegenden Beispiel als umlaufende Ringnut um den Hohlkolben 54 ausgebildet, um den Quadring 72 umlaufend gleichmäßig mit Hydraulikdruck zu beaufschlagen. Ferner mündet im vorliegenden Beispiel der Steuerkanal 86 in einer um den Hohlkolben 54 umlaufenden Steuerkanalnut 87 in Form einer Ringnut, welche axial mit dem Verbindungskanal 114 in Fluidkommunikation steht.

Bei Drucklosstellung des zweiten Medieneinlasskanals 24 und des Steuerkanals 86 erzeugt die Verformung durch elastische Entspannung des Quadrings 72, insbesondere der im entlasteten Zustand konkaven rotorseitigen Quadringstirnseite 72b, eine von dem Rotor 16 wegweisende axiale Kraftkomponente F, indem sich der Quadring 72 von der Ringwandung 112b durch elastische Rückverformung abgedrückt. Durch die radiale Vorspannung des Quadrings 72 auf dem Hohlkolben 54 überträgt der Quadring 72 durch seine elastische Rückverformung die axiale Kraftkomponente F auf den Gleitringträger 53 bzw. Hohlkolben 54 weg vom Rotor 16. Der Quadring 72 sitzt dabei mit seiner konkaven Innenseite 72d mit zwei Dichtlippen 73d vorgespannt an dem Außendurchmesser D1' des Hohlkolbens 54 auf, wodurch eine gute Mitnahme gewährleistet ist. Der Quadring 72 nimmt also den Hohlkolben 54 axial mit, indem die durch elastische Rückverformung vom Quadring 72 ausgeübte Kraftkomponente F auf den Hohlkolben 54 wirkt und damit zur Öffnung der Gleitringdichtung 50 bei Drucklosstellung des zweiten Medieneinlasskanals 24 und des Steuerkanals 86 zumindest beiträgt. Gleichzeitig dichtet der Außenumfang 72a des Quadrings 72 ausreichend gegen den Nutgrund 112a, so dass bei Druckbeaufschlagung mit flüssigem Medium über den Steuerkanal 86, der Quadring 72 von dem Mediumsdruck gegen die rotorseitige Ringwandung 112b gepresst und dabei elastisch verformt wird. In diesem druckbeaufschlagten elastisch verformten Zustand des Quadrings 72 dichten dann insbesondere die rotorseitige Stirnseite 72b und/oder die radiale Innenseite 72d des Quadrings 72 ausreichend gegen die rotorseitige Ringwandung 112b bzw. den Außendurchmesser D1', um unerwünschte Leckage an der Sekundärdichtung 78 zu vermeiden. Bei Druckbeaufschlagung dichtet der Quadring 72 rotorseitig mit zwei Dichtlippen 73b gegen die rotorseitige Ringwandung 112b des stationären Gehäuseteils 12 und drückt sich bei Druckentlastung mit den zwei Dichtlippen 73b von der Ringwandung 112b wieder ab. Ein solcher Elastomerring weist in vorteilhafter Weise definierte Verformungseigenschaften auf.

Dadurch weist die Drehdurchführung 10 unter anderem gute Trockenlaufeigenschaften auf und im Druckluftbetrieb wird ein hinreichender Luftspalt 76 zwischen den beiden Dichtflächen 56a, 58a der vorzugsweise eingesetzten SiC-SiC Gleitringdichtung 50 gewährleistet, wobei aufgrund des geringeren Belastungsverhältnisses B bei Druckluftbeaufschlagung über den ersten Medieneinlasskanal 22 oder den axialen Medieneinlasskanal 26 trotzdem eine geringe Luftleckagerate gewährleistet ist.

Der geöffnete Zustand der Gleitringdichtung ist in Fig. 20 bis 21 dargestellt, wobei der Luftspalt 76 zur Veranschaulichung übertrieben dargestellt sein kann. Der Quadring 72 kann im geöffneten Zustand durch Anlage an der rotorabgewandten umlaufenden Ringwandung 112c der Nut 112 auch einen Anschlag für die axiale Bewegung des Hohlkolbens 54 bzw. der Statorgleitringanordnung 52 finden.

Somit bewegt sich der auf dem Hohlkolben 54 vorgespannte Quadring 72 gemeinsam mit dem Hohlkolben 54 zwischen dem geschlossenen und geöffneten Zustand der Gleitringdichtung 50, wobei sich der Quadring 72 innerhalb der mit axialem Übermaß gefertigten Ringnut 112 axial bewegt, insbesondere zwischen den beiden Ringwänden 112b und 112c, wie dies in den Fig. 18 bis 21 der Anschaulichkeit halber ggf. übertrieben dargestellt zu sehen ist.

Somit bildet der in diesem Beispiel als Quadring 72 ausgebildete erste Sekundärdichtring ein elastomeres Rückverformungselement 71, welches zu einer zuverlässigen Pop-off®-Funktion bei Drucklosstellung des flüssigen Mediums beiträgt. Ferner kann das Rückverformungselement 71 zu schnellen Schaltvorgängen beim Umschalten insbesondere zwischen Druckbeaufschlagung mit flüssigem Medium über den zweiten Medieneinlasskanal 24 einerseits und Druckluft über den ersten bzw. axialen Medieneinlasskanal 22, 26 andererseits beitragen. Der U-Cup Ring 74 sorgt für die Pop-off®-Funktion nach Beaufschlagung mit Druckluft oder KSS über den ersten Medieneinlasskanal bei dem niedrigen Belastungsverhältnis B. Somit ist ein schneller Druckwechsel zwischen den verschiedenen Medieneinlasskanälen ohne Restdruck in der Steuerleitung 86 möglich. Die Umschaltung zwischen den verschiedenen Belastungsverhältnissen B und B', erfolgt dabei rein mechanisch/physikalisch durch die Druckbeaufschlagung mit den jeweils eingeleiteten Medien bzw. Drucklosstellung.

Durch das Rückverformungselement 71 bzw. die Sekundärdichtung 78 können zuverlässige Schaltimpulse und ein relativ widerstandsloses axiales Verschieben des Hohlkolben 54 bzw. des schwebenden Gleitrings 56 gewährleistet werden. Insbesondere können schnelle Schaltwechsel zwischen dem ersten Medieneinlasskanal 22 bei Druckbeaufschlagung mit Druckluft und dem zweiten Medieneinlasskanal 24 bei Druckbeaufschlagung mit flüssigem Medium gewährleistet werden.

Zusammenfassend kann eine zuverlässige allmedientaugliche Drehdurchführung 10 bereitgestellt werden, wobei insbesondere der erste Medieneinlasskanal 22 für gasförmige Medien, gegebenenfalls auch für Kühlschmierstoff (KSS), der zweite Medieneinlasskanal für flüssige Medien, insbesondere für Schneidöl und Hydrauliköl, gegebenenfalls aber auch für Kühlschmierstoff (KSS) und der axiale dritte Medieneinlasskanal 26 für Mindermengen- bzw. Minimalmengenschmierung (MMS/MQS) bzw. ein Öl-Gas-Aerosol, gegebenenfalls aber auch für Druckluft oder KSS geeignet sind. Dabei ist eine hohe Zuverlässigkeit und Variabilität für den Betrieb mit allen unterschiedlichen Medien gewährleistet.

Durch das Hinzufügen des zweiten Wirkdurchmessers D1' am Hohlkolben 54 wird das Belastungsverhältnis gegenüber dem ersten Wirkdurchmesser D1 von B auf B' vergrößert, sodass die Dichtflächen 56a, 58a auch bei Beaufschlagung mit höherviskosen flüssigen Medien, wie Schneidöl oder Hydrauliköl, geschlossen bleiben bzw. eine hinreichend geringe Leckagerate aufweisen, bzw. im Wesentlichen leckagefrei arbeiten (Schaltleckage bzw. Schwitzen).

Dadurch, dass das Belastungsverhältnis B insbesondere bei Druckluftbeaufschlagung des ersten Medieneinlasskanals 22 einerseits niedriger ist als das Belastungsverhältnis B', andererseits aber höher als bei vielen anderen Drehdurchführungen, wird ein zuverlässiger Druckluftbetrieb bei gleichzeitig geringer Luftleckage gewährleistet.

Es werden also unterschiedliche Medieneinlasskanäle, die unterschiedliche Belastungsverhältnisse der Drehdurchführung 10 bewirken, mit jeweils zugeordneten Medien geschaltet. Die jeweiligen Belastungsverhältnisse B bzw. B', die bestimmten Medieneinlasskanälen zugeordnet sind, sind wiederum jeweils auf bestimmte Medien optimiert.

Der erste Medieneinlasskanal 22 ist insbesondere für Druckluft ausgelegt, wobei auch Druckbeaufschlagung mit KSS möglich ist. Sobald der erste Medieneinlasskanal 22 mit Druckluft beaufschlagt wird, strömt diese durch das Rückschlagventil 42 in den Arbeitsraum 19 bzw. den inneren Fluidkanal 20. In diesem Fall liegt an dem Stufenkolben 54 das kleinere Belastungsverhältnis B, im vorliegenden Beispiel vorzugsweise von etwa 0,52 vor. Durch das kleinere Belastungsverhältnis B bildet sich der Spalt 76 zwischen den Gleitringen 56, 58, sodass übermäßiger Verschleiß im Trockenlauf an den Gleitflächen 56a, 58a der beiden Siliziumkarbiddichtringe 56, 58 vermieden werden kann.

Der zweite Medieneinlasskanal 24 ist insbesondere für den Betrieb mit Schneidöl, Hydrauliköl oder Kühlschmierstoff ausgelegt. Sobald der Medieneinlasskanal 24 mit dem flüssigen Medium druckbeaufschlagt wird, gelangt das flüssige Medium einerseits über das Rückschlagventil 44 in den Arbeitsraum 19 bzw. den inneren Fluidkanal 20 und gleichzeitig in den Steuerkanal 86. Über den Steuerkanal 86 beaufschlagt das Medium den Stufenkolben 54 mit Druck, wodurch das größere Belastungsverhältnis B1', in diesem Beispiel von etwa 0,66 bewirkt wird. Die Druckbeaufschlagung des Stufenkolbens 54 über den Steuerkanal 86 bewirkt demnach eine Umschaltung des Belastungsverhältnisses von B nach B', wobei das Belastungsverhältnis B' für flüssige Medien, insbesondere Schneidöl, Hydrauliköl oder KSS optimiert ist. Das Rückschlagventil 44 weist einen Steuerdruck von etwa 0,5 bar auf, sodass, sobald der Druck in dem Steuerkanal 86 den Steuerdruck übersteigt, das flüssige Medium in den inneren Fluidkanal 20 einfließen kann. Der schwebende Gleitring 56 wird durch das höhere Belastungsverhältnis B', an den Rotorgleitring 58 gedrückt, sodass die Gleitringdichtung 50 geschlossen bleibt und das flüssige Medium im Wesentlichen leckagefrei durch den Rotor 16 fließen kann. Nach Abschalten des Mediums in dem Medieneinlasskanal 24 werden die beiden Gleitringe 56, 58 durch die Pop-Off®-Funktion wieder getrennt und der Steuerkanal 86 wird vollständig entlastet, was auch als vollständige Entsperrung des Steuerkanals 86 bezeichnet werden kann. Die Pop-Off®-Funktion wird dabei in dem vorliegenden Ausführungsbeispiel durch das elastomere Rückverformungselement 71, z.B. in Form des Quadrings 72 unterstützt, wobei dies für die Multimedientauglichkeit der Drehdurchführung 10 zwar vorteilhaft, aber optional ist.

Das Ausführungsbeispiel weist zwei unterschiedliche Belastungsverhältnisse B, B' auf. Es ist jedoch auch möglich, eine Drehdurchführung sogar mit drei oder mehr Belastungsverhältnissen zu bauen.

Der axiale Medieneinlasskanal 26 ist für Mindermengen- bzw. Minimalmengenschmierung (MMS/MQS) optimiert, wobei auch der Betrieb mit Druckluft oder Kühlschmierstoff (KSS) möglich ist. Der dritte Medieneinlasskanal 26 verläuft dabei axial geradlinig und enthält kein Rückschlagventil, was vorteilhaft ist, damit sich das Aerosol nicht bzw. möglichst wenig entmischt. Bei Druckbeaufschlagung des dritten axialen Medieneinlasskanals 26 mit Mindermengen- bzw. Minimalmengenschmierung wird der schwebende Gleitring 58 mit dem geringeren Belastungsverhältnis B gegen den Rotorgleitring 58 gedrückt, sodass die Gleitringdichtung 50 zwar geschlossen bleibt und das Medium leckagefrei durch den Rotor 16 fließen kann, allerdings mit geringerem Belastungsverhältnis B gegenüber B'. Nach dem Abschalten des Mediums in dem axialen Medieneinlasskanal 26 öffnet wiederum die Gleitringdichtung 50, d.h. die Gleitringe 56, 58 werden durch die Pop-Off®-Funktion getrennt, hier insbesondere bewirkt durch eine elastische Rückverformung des U-Cup-Rings 74.

Es wird nochmals darauf hingewiesen, dass die Multimedientauglichkeit bzw. die Umschaltung des Belastungsverhältnisses einerseits und die Verwendung des Quadrings 72 andererseits in Kombination synergistische Vorteile bietet, diese beiden Aspekte der vorliegenden Erfindung aber auch getrennt verwirklicht werden können. So kann z.B. der Quadring 72 auch bei konventionellen Drehdurchführungen mit nur einem festen Belastungsverhältnis (vgl. auch EP 1 744 502 oder EP 2 497 978) und/oder mit nur einem Medienanschlussport als elastomeres Rückverformungselement 71 eingesetzt werden und die Multimedientauglichkeit bzw. Umschaltung des Belastungsverhältnisses zwischen zwei oder mehr verschiedenen Werten kann grundsätzlich auch mit klassischen Sekundärdichtringen, wie z.B. O-Ringen realisiert werden.

Es ist für den Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Räumlich orientierende Begriffe wie vorne oder hinten sind nicht absolut im Raum zu verstehen, sondern dienen der Bezeichnung der relativen Beziehung der Bauteile, wobei mit "vorne" die Rotorseite und mit "hinten" oder "rückwärtig" die dem Rotor gegenüberliegende axiale Statorseite bezeichnet sind.

**Patentansprüche**

1. Multimedientaugliche Drehdurchführung (10) zum Überführen von verschiedenen fluiden Medien mit unterschiedlichen Viskositäten von einem stationären Maschinenteil auf einen rotierenden Maschinenteil, umfassend:

   einen stationären Gehäuseteil (12) zum Einbau in den stationären Maschenteil und mit einem Arbeitsraum (19),
   einen Rotor (16) zum Verbinden mit dem rotierenden Maschinenteil und mit einem Fluidkanal (17) zur Herstellung einer Fluidverbindung mit dem Arbeitsraum (19) des stationären Gehäuseteils (12),
   eine Gleitringdichtung (50) zwischen dem stationären Gehäuseteil (12) und dem Rotor (16), wobei die Gleitringdichtung (50) einen mit dem Rotor (16) rotierenden Rotorgleitring (58) und einen Statorgleitring (56) umfasst, wobei der Statorgleitring (56) oder der Rotorgleitring (58) an einem axial beweglichen Gleitringträger (53) befestigt ist, und die Gleitringdichtung (50) durch axiale Bewegung des Gleitringträgers (53) öffnen und schließen kann,
   wobei der stationäre Gehäuseteil (12) zumindest einen ersten und zweiten Medieneinlasskanal (22, 24) zum Einleiten von fluiden Medien in den stationären Gehäuseteil (12) umfasst, wobei der erste und zweite Medieneinlasskanal (22, 24) in den Arbeitsraum (19) münden und wobei über den ersten oder den zweiten Medieneinlasskanal (22, 24) fluide Medien unter Druckbeaufschlagung in die Drehdurchführung (10) eingeleitet werden können, und
   wobei die Gleitringdichtung (50) bei Druckbeaufschlagung des ersten Medieneinlasskanals (22) mit Medium ein erstes Belastungsverhältnis (B) und bei Druckbeaufschlagung des zweiten Medieneinlasskanals (24) mit Medium ein zweites Belastungsverhältnis (B') aufweist.

2. Drehdurchführung (10) gemäß Anspruch 1,

   wobei die Gleitringdichtung (50) zwischen dem ersten und zweiten Belastungsverhältnis (B, B') umschaltbar ist,
   insbesondere wobei die Umschaltung zwischen dem ersten und zweiten Belastungsverhältnis (B, B') hydraulisch an dem zweiten Medieneinlasskanal (24) erfolgt, derart dass die Gleitringdichtung (50) bei Drucklosigkeit an dem zweiten Medieneinlasskanal (24) das erste Belastungsverhältnis (B) aufweist und bei Druckbeaufschlagung des zweiten Medieneinlasskanals (24) mit Medium das zweite Belastungsverhältnis (B') aufweist.

3. Drehdurchführung (10) gemäß Anspruch 2, wobei der Gleitringträger (53) mit dem daran befestigten Statorgleitring (56) eine axial bewegliche Gleitringanordnung (50) bildet, und wobei die Umschaltung von dem ersten (B) auf das zweite Belastungsverhältnis (B') durch Druckbeaufschlagung des Gleitringträgers (53) mit dem Medium hydraulisch erfolgt.

4. Drehdurchführung (10) gemäß einem der vorstehenden Ansprüche,

   wobei der stationäre Gehäuseteil (12) einen internen Steuerkanal (86) umfasst, und der Steuerkanal (86) von dem zweiten Medieneinlasskanal (24) abzweigt und zu dem Gleitringträger (53) führt,
   insbesondere wobei der zweite Medieneinlasskanal (24) ein integriertes Rückschlagventil (44) aufweist und der Steuerkanal (86) vor dem Rückschlagventil (44) abzweigt und zu dem Gleitringträger (53) führt.

5. Drehdurchführung (10) gemäß einem der vorstehenden Ansprüche,
   wobei von dem zweiten Medieneinlasskanal (24) ein Steuerkanal (86) abzweigt und wobei zumindest ein anderer der Medieneinlasskanäle (22, 26) keinen Steuerkanal aufweist, so dass sich bei Druckbeaufschlagung des zweiten Medieneinlasskanals (24) und des Steuerkanals (86) ein anderes Belastungsverhältnis (B') einstellt als bei Druckbeaufschlagung eines Medieneinlasskanals (22, 26) ohne Steuerkanal.

6. Drehdurchführung (10) gemäß einem der vorstehenden Ansprüche,
   wobei der stationäre Gehäuseteil (12) einen internen Steuerkanal (86) umfasst, welcher von dem zweiten Medieneinlasskanal (24) abzweigt und an einen Außendurchmesser (D1') des Gleitringträgers (53) führt, um den Außendurchmesser (D1') des Gleitringträgers (53) mittels eines flüssigen Mediums, das in den zweiten Medieneinlasskanal (24) druckbeaufschlagt eingeleitet wird, mit hydraulischem Druck zu beaufschlagen.

7. Drehdurchführung (10) gemäß einem der vorstehenden Ansprüche,
   wobei der Gleitringträger (53) einen ersten axialen Bereich (82) mit einem ersten Wirkdurchmesser (D1) und einen zweiten axialen Bereich (84) mit einem zweiten Wirkdurchmesser (D1') aufweist, wobei der erste Wirkdurchmesser (D1) zu dem ersten Belastungsverhältnis (B) und der zweite Wirkdurchmesser (D1') zu dem zweiten Belastungsverhältnis (B') korrespondiert, und wobei ein Steuerkanal (86) umfasst ist, welcher zu dem zweiten axialen Bereich (84) führt, wobei das zweite Belastungsverhältnis (B') dadurch bewirkt wird, dass der zweite Wirkdurchmesser (D1') des Gleitringträgers (53) über den Steuerkanal (86) mit flüssigem Medium druckbeaufschlagt wird.

8. Drehdurchführung (10) gemäß einem der vorstehenden Ansprüche,
   umfassend einen dritten Medieneinlasskanal (26) zum Einleiten von fluiden Medien in den stationären Gehäuseteil (12), wobei der dritte Medieneinlasskanal (26) in den Arbeitsraum (19) mündet und wobei wechselweise über den ersten, den zweiten oder den dritten Medieneinlasskanal (22, 24, 26) fluide Medien unter Druckbeaufschlagung in die Drehdurchführung (10) eingeleitet werden können, insbesondere wobei der dritte Medieneinlasskanal (26) axial verläuft und axial in den Arbeitsraum (19) mündet.

9. Drehdurchführung (10) gemäß einem der vorstehenden Ansprüche,
   wobei zumindest eines, mehrere oder alle der folgenden Merkmale erfüllt sind:

   zumindest einer der Medieneinlasskanäle (22, 24) verläuft radial und mündet radial in den Arbeitsraum (19),
   zumindest zwei der Medieneinlasskanäle (22, 24) verlaufen radial und münden radial in den Arbeitsraum (19),
   einer der Medieneinlasskanäle (26) verläuft axial und mündet axial in den Arbeitsraum (19).

10. Drehdurchführung (10) gemäß einem der vorstehenden Ansprüche,

    wobei zumindest eines, mehrere oder alle der folgenden Merkmale erfüllt sind:

zumindest einer der Medieneinlasskanäle (22, 24) weist ein integriertes Rückschlagventil (42, 44) auf,

zumindest einer der radialen Medieneinlasskanäle (22, 24) weist ein integriertes Rückschlagventil (42, 44) auf,

zumindest zwei der radialen Medieneinlasskanäle (42, 44) weisen jeweils ein integriertes Rückschlagventil (42, 44) auf,

der axiale Medieneinlasskanal (26) weist kein integriertes Rückschlagventil auf,

zumindest einer der Medieneinlasskanäle, vorzugsweise der zweite Medieneinlasskanal (24) ist hergerichtet, bei Druckbeaufschlagung mit Schneid- oder Hydrauliköl das zweite Belastungsverhältnis (B') der Gleitringdichtung (50) zu bewirken, wobei das zweite Belastungsverhältnis (B') für Schneid- oder Hydrauliköl geeignet ist,

zumindest einer der Medieneinlasskanäle (22, 26) ist hergerichtet, bei Druckbeaufschlagung das erste Belastungsverhältnis (B) der Gleitringdichtung (50) zu bewirken, wobei das erste Belastungsverhältnis (B) für gasförmige Medien, z.B. Druckluft geeignet ist,

zumindest einer der Medieneinlasskanäle ist hergerichtet, bei Druckbeaufschlagung mit Kühlschmiermittel oder Kühlschmierstoff das erste oder das zweite Belastungsverhältnis (B, B') zu bewirken, wobei das erste bzw. zweite Belastungsverhältnis für Kühlschmiermittel bzw. Kühlschmierstoff geeignet ist,

einer der Medieneinlasskanäle, vorzugsweise der axiale Medieneinlasskanal (26), ist hergerichtet, bei Druckbeaufschlagung mit einem Aerosol einer Mindermengen- oder Minimalmengenschmierung das erste Belastungsverhältnis (B) der Gleitringdichtung (50) zu bewirken, wobei das erste Belastungsverhältnis (B) für das Aerosol einer Mindermengen- oder Minimalmengenschmierung geeignet ist.

11. Drehdurchführung (10) gemäß einem der vorstehenden Ansprüche,
wobei das erste Belastungsverhältnis (B) der Gleitringdichtung (50) einen Wert im Bereich von etwa 0,45 bis 0,6, vorzugsweise im Bereich von etwa 0,47 bis 0,57, vorzugsweise im Bereich von etwa 0,49 bis 0,55, vorzugsweise einen Wert von etwa 0,52 +/-0,02 aufweist und/oder wobei das zweite Belastungsverhältnis (B') der Gleitringdichtung (50) einen Wert größer als etwa 0,6, vorzugsweise im Bereich von etwa 0,62 bis 1, vorzugsweise im Bereich von etwa 0,65 bis 0,7, vorzugsweise einen Wert von etwa 0,66 +/-0,02 aufweist.

12. Drehdurchführung (10) gemäß einem der vorstehenden Ansprüche,
wobei ein dritter axialer Medieneinlasskanal (26) umfasst ist und bei Druckbeaufschlagung des ersten Medieneinlasskanals (22) mit einem fluiden Medium, insbesondere mit einem gasförmigen Medium, das erste Belastungsverhältnis (B), bei Druckbeaufschlagung des zweiten Medieneinlasskanals (24) mit einem flüssigen Medium, insbesondere mit Schneid- oder Hydrauliköl oder Kühlschmierstoff, das zweite Belastungsverhältnis (B'), und bei Druckbeaufschlagung des dritten axialen Medieneinlasskanals (26) mit einem fluiden Medium, insbesondere mit einem Aerosol einer Mindermengen- oder Minimalmengenschmierung, das erste Belastungsverhältnis (B) vorliegt.

13. Drehdurchführung (10) gemäß einem der vorstehenden Ansprüche,
wobei der zweite Medieneinlasskanal (24) radial verläuft und ein anderer Medieneinlasskanal (26) axial verläuft und wobei das Belastungsverhältnis (B') bei Druckbeaufschlagung des radialen zweiten Medieneinlasskanals (24) und das Belastungsverhältnis (B) bei Druckbeaufschlagung des axialen Medieneinlasskanals (26) unterschiedlich sind.

14. Drehdurchführung (10) gemäß einem der vorstehenden Ansprüche,
wobei zumindest einer der beiden Gleitringe (56, 58), vorzugsweise beide Gleitringe der Gleitringdichtung (50) als Siliciumcarbid-Gleitringe ausgebildet sind.

15. Drehdurchführung (10) gemäß einem der vorstehenden Ansprüche,

wobei ein Steuerkanal (86) an einen Außendurchmesser (D1') des Gleitringträgers (53) führt, wobei der Gleitringträger (53) mittels einer Sekundärdichtung (78) in dem stationären Gehäuseteil (12) gedichtet ist und die Sekundärdichtung (78) einen ersten und einen zweiten Sekundärdichtring (72, 74) umfasst, welche auf axial gegenüberliegenden Seiten des Steuerkanals (86) angeordnet sind und der erste Sekundärdichtring als Quadring (72) und/oder der zweite Sekundärdichtring als Elastomerring (74) mit einem U-förmigen Querschnitt ausgebildet sind,
insbesondere wobei der Quadring (72) auf dem Gleitringträger (53) vorgespannt ist und an seinem Außendurchmesser eine axiale Beweglichkeit zu dem stationären Gehäuseteil (12) aufweist,

insbesondere wobei der stationäre Gehäuseteil (12) eine umlaufende Nut (112) für den Quadring (72) aufweist, in welcher der Quadring (72) beherbergt ist, wobei der Quadring (72) in der Nut (112) ein axiales Spiel für eine axiale Beweglichkeit aufweist.

**Claims**

1.  Multimedia-compatible rotary union (10) for transferring different fluid media having different viscosities from a stationary machine part to a rotating machine part, comprising:

    a stationary housing part (12) for being installed in the stationary machine part and having a working space (19);
    a rotor (16) for being connected to the rotating machine part and having a fluid channel (17) for establishing fluid communication with the working space (19) of the stationary housing part (12);
    a mechanical seal (50) between the stationary housing part (12) and the rotor (16), the mechanical seal (50) comprising a rotor seal ring (58) rotating with the rotor (16) and a stator seal ring (56), the stator seal ring (56) or the rotor seal ring (58) being secured to an axially movable seal ring carrier (53), and the mechanical seal (50) being adapted to open and close by axially moving the seal ring carrier (53);
    wherein the stationary housing part (12) comprises at least first and second media inlet channels (22, 24) for introducing fluid media into the stationary housing part (12), wherein the first and second media inlet channels (22, 24) open into the working space (19) and wherein fluid media can be introduced under pressure into the rotary union (10) via the first or the second media inlet channel (22, 24); and
    wherein the mechanical seal (50) exhibits a first balance ratio (B) when the first media inlet channel (22) is pressurised with medium and a second balance ratio (B') when the second media inlet channel (24) is pressurised with medium.

2.  The rotary union (10) according to claim 1,

    wherein the mechanical seal (50) is switchable between the first and second balance ratios (B, B');
    in particular wherein the switching between the first and second balance ratios (B, B') is effected hydraulically at the second media inlet channel (24) in such a way that the mechanical seal (50) exhibits the first balance ratio (B) when the second media inlet channel (24) is depressurised and exhibits the second balance ratio (B') when the second media inlet channel (24) is pressurised with medium.

3.  The rotary union (10) according to claim 2, wherein the seal ring carrier (53) with the stator seal ring (56) attached thereto defines an axially movable seal ring arrangement (50), and wherein the switching from the first (B) to the second (B') balance ratio is effected hydraulically by pressurising the seal ring carrier (53) with the medium.

4.  The rotary union (10) according to any one of the preceding claims,

    wherein the stationary housing part (12) comprises an internal control channel (86), and wherein the control channel (86) branches off from the second media inlet channel (24) and leads to the seal ring carrier (53);
    in particular wherein the second media inlet channel (24) has an integrated check valve (44) and the control channel (86) branches off upstream of the check valve (44) and leads to the seal ring carrier (53).

5.  The rotary union (10) according to any one of the preceding claims, wherein a control channel (86) branches off from the second media inlet channel (24), and wherein at least one other of the media inlet channels (22, 26) has no control channel, so that when the second media inlet channel (24) and the control channel (86) are pressurised, a different balance ratio (B') is established than when a media inlet channel (22, 26) without a control channel is pressurised.

6.  The rotary union (10) according to any one of the preceding claims, wherein the stationary housing part (12) comprises an internal control channel (86) which branches off from the second media inlet channel (24) and leads to an outer diameter (D1') of the seal ring carrier (53) in order to apply hydraulic pressure to the outer diameter (D1') of the seal ring carrier (53) using a liquid medium that is introduced under pressure into the second media inlet channel (24).

7.  The rotary union (10) according to any one of the preceding claims, wherein the seal ring carrier (53) comprises a first axial region (82) having a first effective diameter (D1) and a second axial region (84) having a second effective diameter (D1'), wherein the first effective diameter (D1) corresponds to the first balance ratio (B) and the second effective diameter (D1') corresponds to the second balance ratio (B'), and wherein a control channel (86) is provided, which leads to the second axial region (84), wherein the second balance ratio (B') is established by pressurising the second effective diameter (D1') of the seal ring carrier (53) with liquid medium via the control channel (86).

8. The rotary union (10) according to any one of the preceding claims,
comprising a third media inlet channel (26) for introducing fluid media into the stationary housing part (12), wherein the third media inlet channel (26) opens into the working space (19), and wherein fluid media can be alternately introduced under pressure into the rotary union (10) via the first, the second or the third media inlet channel (22, 24, 26); in particular wherein the third media inlet channel (26) extends axially and opens axially into the working space (19).

9. The rotary union (10) according to any one of the preceding claims,
wherein at least one, a plurality or all of the following features are met:

> at least one of the media inlet channels (22, 24) extends radially and opens radially into the working space (19);
> at least two of the media inlet channels (22, 24) extend radially and open radially into the working space (19);
> one of the media inlet channels (26) extends axially and opens axially into the working space (19).

10. The rotary union (10) according to any one of the preceding claims,
wherein at least one, a plurality or all of the following features are met:

> at least one of the media inlet channels (22, 24) has an integrated check valve (42, 44);
> at least one of the radial media inlet channels (22, 24) has an integrated check valve (42, 44);
> at least two of the radial media inlet channels (22, 24) have a respective integrated check valve (42, 44);
> the axial media inlet channel (26) does not have an integrated check valve;
> at least one of the media inlet channels, preferably the second media inlet channel (24), is adapted to establish the second balance ratio (B') of the mechanical seal (50) when pressurised with cutting oil or hydraulic oil, the second balance ratio (B') being suitable for cutting oil or hydraulic oil;
> at least one of the media inlet channels (22, 26) is adapted to establish the first balance ratio (B) of the mechanical seal (50) when pressurised, the first balance ratio (B) being suitable for gaseous media, e.g. compressed air;
at least one of the media inlet channels is adapted to establish the first or the second balance ratio (B, B') when pressurised with cooling lubricant or cooling lubricating agent, said first or second balance ratio, respectively, being suitable for cooling lubricant or cooling lubricating agent;
one of the media inlet channels, preferably the axial media inlet channel (26), is adapted to establish the first balance ratio (B) of the mechanical seal (50) when pressurised with a reduced quantity or minimum quantity lubrication aerosol, the first balance ratio (B) being suitable for the reduced quantity or minimum quantity lubrication aerosol.

11. The rotary union (10) according to any one of the preceding claims,
wherein the first balance ratio (B) of the mechanical seal (50) has a value in the range of approximately 0.45 to 0.6, preferably in the range of approximately 0.47 to 0.57, preferably in the range of approximately 0.49 to 0.55, preferably a value of approximately 0.52 ±0.02; and/or wherein the second balance ratio (B') of the mechanical seal (50) has a value of greater than approximately 0.6, preferably in the range of approximately 0.62 to 1, preferably in the range of approximately 0.65 to 0.7, preferably a value of approximately 0.66 ±0.02.

12. The rotary union (10) according to any one of the preceding claims,
wherein a third axial media inlet channel (26) is provided, and wherein, when the first media inlet channel (22) is pressurised with a fluid medium, in particular with a gaseous medium, the first balance ratio (B) will be established, when the second media inlet channel (24) is pressurised with a liquid medium, in particular with cutting oil or hydraulic oil or cooling lubricant, the second balance ratio (B') will be established, and when the third, axial media inlet channel (26) is pressurised with a fluid medium, in particular with a reduced quantity or minimum quantity lubrication aerosol, the first balance ratio (B) will be established.

13. The rotary union (10) according to any one of the preceding claims,
wherein the second media inlet channel (24) extends radially and another media inlet channel (26) extends axially; and wherein the balance ratio (B') when the radial second media inlet channel (24) is pressurised and the balance ratio (B) when the axial media inlet channel (26) is pressurised are different.

**14.** The rotary union (10) according to any one of the preceding claims,
wherein at least one of the two seal rings (56, 58), preferably both seal rings of the mechanical seal (50), are in the form of silicon carbide seal rings.

**15.** The rotary union (10) according to any one of the preceding claims,

wherein a control channel (86) leads to an outer diameter (D1') of the seal ring carrier (53), wherein the seal ring carrier (53) is sealed in the stationary housing part (12) by a secondary seal (78), and wherein the secondary seal (78) comprises a first and a second secondary sealing ring (72, 74) which are arranged on axially opposite sides of the control channel (86), and wherein the first secondary sealing ring is in the form of a quad ring (72) and/or the second secondary sealing ring is in the form of an elastomer ring (74) with a U-shaped cross section; in particular wherein the quad ring (72) is biased on the seal ring carrier (53) and has axial mobility relative to the stationary housing part (12) at its outer diameter; in particular wherein the stationary housing part (12) has a circumferential groove (112) for the quad ring (72), in which the quad ring (72) is accommodated, wherein the quad ring (72) has an axial clearance in said groove (112) for axial mobility.

**Revendications**

**1.** Passage tournant (10) approprié pour des milieux multiples, destiné à transférer différents milieux fluides, ayant des viscosités différentes, d'une partie de machine stationnaire vers une partie de machine rotative, comprenant :

une partie de boîtier stationnaire (12) destinée à être montée dans la partie de machine stationnaire et comportant un espace de travail (19), un rotor (16) destiné à être relié à la partie de machine rotative et comportant un canal de fluide (17) aux fins d'établir un raccordement de fluide avec l'espace de travail (19) de la partie de boîtier stationnaire (12), une garniture mécanique (50) entre la partie de boîtier stationnaire (12) et le rotor (16), la garniture mécanique (50) comportant une bague de glissement de rotor (58) tournant avec le rotor (16) et une bague de glissement de stator (56), la bague de glissement de stator (56) ou la bague de glissement de rotor (58) étant fixée à un support de bague de glissement (53) déplaçable axialement, et la garniture mécanique (50) pouvant ouvrir et fermer par déplacement axial du support de bague de glissement (53), dans lequel la partie de boîtier stationnaire (12) comprend au moins un premier et un deuxième canal d'admission de milieu (22, 24) pour introduire des milieux fluides dans la partie de boîtier stationnaire (12), le premier et le deuxième canal d'admission de milieu (22, 24) débouchant dans l'espace de travail (19), et des milieux fluides pouvant être introduits dans le passage tournant (10), avec application d'une pression, par l'intermédiaire du premier ou du deuxième canal d'admission de milieu (22, 24), et dans lequel la garniture mécanique (50), en cas d'application de pression au premier canal d'admission de milieu (22) avec un milieu, présente un premier rapport de charge (B) et, en cas d'application de pression au deuxième canal d'admission de milieu (24) avec un milieu, présente un deuxième rapport de charge (B').

**2.** Passage tournant (10) selon la revendication 1,

dans lequel la garniture mécanique (50) peut être commutée entre le premier et le deuxième rapport de charge (B, B'), notamment dans lequel la commutation entre le premier et le deuxième rapport de charge (B, B') s'effectue par voie hydraulique sur le deuxième canal d'admission de milieu (24), de manière à ce que, en l'absence de pression sur le deuxième canal d'admission de milieu (24), la garniture mécanique (50) présente le premier rapport de charge (B) et, en cas d'application de pression au deuxième canal d'admission de milieu (24) avec un milieu, présente le deuxième rapport de charge (B').

**3.** Passage tournant (10) selon la revendication 2, dans lequel le support de bague de glissement (53) forme un ensemble de bague de glissement (50) axialement mobile avec la bague de glissement de stator (56) qui y est fixée, et dans lequel la commutation du premier (B) au deuxième rapport de charge (B') s'effectue par voie hydraulique, par application d'une pression au support de bague de glissement (53) avec le milieu.

**4.** Passage tournant (10) selon une des revendications précédentes,

dans lequel la partie de boîtier stationnaire (12) comprend un canal de commande (86) interne, et le canal de commande (86) bifurque à partir du deuxième canal d'admission de milieu (24) et mène au support de bague de glissement (53), notamment dans lequel le deuxième canal d'admission de milieu (24) présente un clapet de non-retour (44) intégré, et le canal de commande (86) bifurque en amont du clapet de non-retour (44) et mène au support de bague de glissement (53).

**5.** Passage tournant (10) selon une des revendications précédentes,
dans lequel un canal de commande (86) bifurque à partir du deuxième canal d'admission de milieu (24), et dans lequel au moins un autre des canaux d'admission de milieu (22, 26) ne présente pas de canal de commande, de sorte que, en cas d'application de pression au deuxième canal d'admission de milieu (24) et au canal de commande (86), le rapport de charge (B') établi est différent de celui obtenu lors de l'application d'une pression à un canal d'admission de milieu (22, 26) dépourvu de canal de commande.

**6.** Passage tournant (10) selon une des revendications précédentes,
dans lequel la partie de boîtier stationnaire (12) comprend un canal de commande (86) interne qui bifurque à partir du deuxième canal d'admission de milieu (24) et mène jusqu'à un diamètre extérieur (D1') du support de bague de glissement (53), aux fins d'appliquer une pression hydraulique au diamètre extérieur (D1') du support de bague de glissement (53), au moyen d'un milieu fluide qui est introduit sous pression dans le deuxième canal d'admission de milieu (24).

**7.** Passage tournant (10) selon une des revendications précédentes,
dans lequel le support de bague de glissement (53) présente une première zone axiale (82) avec un premier diamètre actif (D1) et une deuxième zone axiale (84) avec un deuxième diamètre actif (D1'), le premier diamètre actif (D1) correspondant au premier rapport de charge (B) et le deuxième diamètre actif (D1') correspondant au deuxième rapport de charge (B'), et dans lequel un canal de commande (86) est compris, qui mène à la deuxième zone axiale (84), le deuxième rapport de charge (B') étant obtenu par le fait que le deuxième diamètre actif (D1') du support de bague de glissement (53) est soumis à une pression avec du milieu fluide, par l'intermédiaire du canal de commande (86).

**8.** Passage tournant (10) selon une des revendications précédentes,
comprenant un troisième canal d'admission de milieu (26) destiné à introduire des milieux fluides dans la partie de boîtier stationnaire (12), le troisième canal d'admission de milieu (26) débouchant dans l'espace de travail (19), et des milieux fluides pouvant être introduits dans le passage tournant (10), avec application d'une pression, en alternance par l'intermédiaire du premier, du deuxième ou du troisième canal d'admission de milieu (22, 24, 26), le troisième canal d'admission de milieu (26) s'étendant notamment de manière axiale et débouchant axialement dans l'espace de travail (19).

**9.** Passage tournant (10) selon une des revendications précédentes,
dans lequel au moins une, plusieurs ou l'ensemble des caractéristiques suivantes sont présentes :

au moins un des canaux d'admission de milieu (22, 24) s'étend radialement et débouche radialement dans l'espace de travail (19),
au moins deux des canaux d'admission de milieu (22, 24) s'étendent radialement et débouchent radialement dans l'espace de travail (19),
un des canaux d'admission de milieu (26) s'étend axialement et débouche axialement dans l'espace de travail (19).

**10.** Passage tournant (10) selon une des revendications précédentes,
dans lequel au moins une, plusieurs ou l'ensemble des caractéristiques suivantes sont présentes :

au moins un des canaux d'admission de milieu (22, 24) présente un clapet de non-retour (42, 44) intégré,
au moins un des canaux d'admission de milieu (22, 24) radiaux présente un clapet de non-retour (42, 44) intégré,
au moins deux des canaux d'admission de milieu (22, 24) radiaux présentent chacun un clapet de non-retour (42, 44) intégré,
le canal d'admission de milieu (26) axial ne présente pas de clapet de non-retour intégré,
au moins un des canaux d'admission de milieu, de préférence le deuxième canal d'admission de milieu (24), est agencé pour établir le deuxième rapport de charge (B') de la garniture mécanique (50) en cas d'application de pression avec de l'huile de coupe ou de l'huile hydraulique, le deuxième rapport de charge (B') étant approprié pour de l'huile de coupe ou de l'huile hydraulique,
au moins un des canaux d'admission de milieu (22, 26) est agencé pour établir le premier rapport de charge (B) de la garniture mécanique (50) en cas d'application de pression, le premier rapport de charge (B) étant approprié pour des milieux gazeux, par exemple de l'air comprimé,
au moins un des canaux d'admission de milieu est agencé pour établir le premier ou le deuxième rapport de charge (B, B') en cas d'application de pression avec un produit lubrifiant réfrigérant ou un matériau lubrifiant réfrigérant, le premier et/ou le deuxième rapport de charge étant approprié pour des produits lubrifiants réfrigérants et/ou des matériaux lubrifiants réfrigérants,

un des canaux d'admission de milieu, de préférence le canal d'admission de milieu (26) axial, est agencé pour établir le premier rapport de charge (B) de la garniture mécanique (50) en cas d'application de pression avec un aérosol d'une lubrification à quantité réduite ou à quantité minimale, le premier rapport de charge (B) étant approprié pour l'aérosol d'une lubrification à quantité réduite ou à quantité minimale.

11. Passage tournant (10) selon une des revendications précédentes,
dans lequel le premier rapport de charge (B) de la garniture mécanique (50) présente une valeur comprise dans la plage allant d'environ 0,45 à 0,6, de préférence dans la plage allant d'environ 0,47 à 0,57, de préférence dans la plage allant d'environ 0,49 à 0,55, de préférence une valeur d'environ 0,52 +/-0,02, et/ou dans lequel le deuxième rapport de charge (B') de la garniture mécanique (50) présente une valeur supérieure à environ 0,6, de préférence dans la plage allant d'environ 0,62 à 1, de préférence dans la plage allant d'environ 0,65 à 0,7, de préférence une valeur d'environ 0,66 +/-0,02.

12. Passage tournant (10) selon une des revendications précédentes,
dans lequel un troisième canal d'admission de milieu (26) est prévu, et en cas d'application de pression au premier canal d'admission de milieu (22) avec un milieu fluide, notamment avec un milieux gazeux, le premier rapport de charge (B) est établi, en cas d'application de pression au deuxième canal d'admission de milieu (24) avec un milieu liquide, notamment avec de l'huile de coupe ou de l'huile hydraulique ou un matériau lubrifiant réfrigérant, le deuxième rapport de charge (B') est établi, et en cas d'application de pression au troisième canal d'admission de milieu (26) axial avec un milieu fluide, notamment avec un aérosol à lubrification à quantité réduite ou à quantité minimale, le premier rapport de charge (B) est établi.

13. Passage tournant (10) selon une des revendications précédentes,
dans lequel le deuxième canal d'admission de milieu (24) s'étend radialement et un autre canal d'admission de milieu (26) s'étend axialement, et dans lequel le rapport de charge (B') en cas d'application de pression au deuxième canal d'admission de milieu (24) radial et le rapport de charge (B) en cas d'application de pression au canal d'admission de milieu (26) axial sont différents.

14. Passage tournant (10) selon une des revendications précédentes,
dans lequel au moins une des deux bagues de glissement (56, 58), de préférence les deux bagues de glissement, de la garniture mécanique (50) sont réalisées comme bagues de glissement en carbure de silicium.

15. Passage tournant (10) selon une des revendications précédentes,

dans lequel un canal de commande (86) mène jusqu'à un diamètre extérieur (D1') du support de bague de glissement (53), le support de bague de glissement (53) étant rendu étanche au moyen d'un joint d'étanchéité secondaire (78) dans la partie de boîtier stationnaire (12), et le joint secondaire (78) comprenant une première et une deuxième bague d'étanchéité secondaires (72, 74) qui sont disposées sur des côtés axialement opposés du canal de commande (86), et la première bague d'étanchéité secondaire étant réalisée comme bague « quadring » (72) et/ou la deuxième bague d'étanchéité secondaire étant réalisée comme bague élastomère (74) avec une section en forme de U,
notamment dans lequel la bague quadring (72) est mise sous précontrainte sur le support de bague de glissement (53) et présente sur son diamètre extérieur une mobilité axiale par rapport à la partie de boîtier stationnaire (12),
notamment dans lequel la partie de boîtier stationnaire (12) présente une gorge (112) périphérique pour la bague quadring (72), dans laquelle la bague quadring (72) est logée, la bague quadring (72) présentant dans la gorge (112) un jeu axial en vue d'une mobilité axiale.

Fig. 1

Fig. 2

Fig. 3

Fig. 4

Fig. 5

Fig. 6

Fig. 7

Fig. 8

Fig. 9

## Fig. 10

## Fig. 11

## Fig. 12

## Fig. 22

Fig. 13

Fig. 14

Fig. 15

Fig. 16

Fig. 17

Fig. 18

Fig. 20

Fig. 19

Fig. 21

**IN DER BESCHREIBUNG AUFGEFÜHRTE DOKUMENTE**

**In der Beschreibung aufgeführte Patentdokumente**

- EP 1744502 B1
- EP 2497978 B1
- DE 102008036051 B3
- US 5669636 A
- EP 1744502 A
- EP 2497978 A